Europäisches Patentamt

European Patent Office

Office européen des brevets

(11) Publication number: **0 071 727**
**B1**

# EUROPEAN PATENT SPECIFICATION

(45) Date of publication of patent specification: **01.10.86**

(21) Application number: **82105491.3**

(22) Date of filing: **23.06.82**

(51) Int. Cl.⁴: **G 06 F 15/06**

(54) Restructurable integrated circuit.

(30) Priority: **24.07.81 US 286426**
**24.07.81 US 286424**
**24.07.81 US 286425**

(43) Date of publication of application:
**16.02.83 Bulletin 83/07**

(45) Publication of the grant of the patent:
**01.10.86 Bulletin 86/40**

(84) Designated Contracting States:
**DE FR GB NL**

(56) References cited:
**EP-A-0 031 889**
**FR-A-2 406 852**
**US-A-4 034 356**

**FOURTH EUROMICRO SYMPOSIUM ON
MICROPROCESSING AND
MICROPROGRAMMING, LARGE SCALE
INTEGRATION: TECHNOLOGY, APPLICATIONS
AND IMPACTS, 17th-19th October 1978-
Munich, pages 34-38, North-Holland Publishing
company-Amsterdam (NL); B.R. BORGERSON:
"A microarchitecture for achieving mainframe
performance using LSI modules"**

(73) Proprietor: **TEXAS INSTRUMENTS
INCORPORATED
13500 North Central Expressway
Dallas Texas 75265 (US)**

(72) Inventor: **Budzinski, Robert L.
1106 Edgewood Drive
Richardson Texas 75081 (US)**
Inventor: **Thatte, Satish M.
1304 Elk Grove
Richardson Texas 75081 (US)**

(74) Representative: **Leiser, Gottfried, Dipl.-Ing. et al
Patentanwälte Prinz, Bunke & Partner
Ernsberger Strasse 19
D-8000 München 60 (DE)**

Courier Press, Leamington Spa, England.

(56) References cited:

IEEE TRANSACTIONS ON COMPUTERS, vol. C-28, no. 10, October 1979, pages 704-721, New York (USA); S.I.KARTASHEV et al.: "A multicomputer system with dynamic architecture"

ELECTRONIC DESIGN, vol. 29, no. 10, May 1981, pages 197-202, WASECA, MN (USA); R.HAINES: "Two muCs on one chip split the silicon and the work"

EDN, vol. 23, no. 3, 5th February 1978, pages 53-61, Denver (USA); J.BRICK et al.: "Microprogramming ups your options in muP-system design"

MORRIS B.: "Semiconductor circuit design", vol. 4, 1975, pages 103-123, Texas Instruments, Bedford (GB); P.VAN CUYLENBURG: "VIII microprocessors"

IEEE TRANSACTIONS ON COMPUTERS, vol. C-28, no. 9, September 1979, pages 602-608, New York (USA); R.A.WOOD: "A high density programmable logic array chip"

## Description

Background of the invention

This invention relates to a restructurable integrated circuit as defined in the first portion of claim 1. Such circuits are known from IEEE Transactions of Computers, Vol. C-28, No. 10, Oct. 1979, pp 704—721, 4th Euromicro Symposium on Microprocessing and Microprogramming, Large Scale Integration: Technology, Applications and Impacts, 17th to 19th October 1978, Munich, pages 34—38 and Electronic Design, Vol. 29, 1981, May, No. 10, pp 197—202. The invention relates also to a multiprocessor system using such circuits.

Additional background references on multiple processing systems, dynamic architecture, and microprocessor architecture generally, include the following: Multiprocessors and Parallel Processing (ed. P. Enslow, Jr. 1974); A. Abd-Alla & A. Meltzer, Principles of Digital Computer Design (1976); C. Mead & L. Conway, Introduction to VLSI Systems (1980); R. Krutz, Microprocessors and Logic Design (1980); G. Myers, Advances in Computer Architecture (1978); Baer, Multiprocessing Systems, 25 IEEE Transactions on Computers 1271 (1976); Thurber & Wald, Associative and Parallel Processors, 7 Computing Surveys 215 (1975); Kartashev & Kartashev, Dynamic Architectures: Problems and Solutions, Computer Magazine, July '78, 26; Kartashev & Kartashev, A Multicomputer System with Dynamic Architecture, 28 IEEE Transactions on Computers 704 (1979); Kartashev & Kartashev, Super Systems for the 80's, Computer Magazine, November 1980, at 11; and Vick, Adaptable Architectures for Super Systems, Computer Magazine, November 1980 at 17.

It is an object of the present invention as claimed to provide processors which can easily be combined into a multi-processor system including any desired number of processors.

A further difficulty, if IC processors are to be made capable of combination into multi-processor systems, is the provision of additional hardware on chip for interface with external processors. I/O communication, receipt and routing of externally generated interrupts, and interprocessor communication with external processors are functions which will require excess hardware if implemented separately.

Thus, it is a further object of the present invention to provide an external interface which can both handle I/O communication and interprocessor communication.

It is a further object of the present invention to provide an interrupt managing structure, in each processor, such that interrupts can be used both to govern interprocessor communication and to transmit externally generated interrupts.

Embodiments of the invention described herein provide for four microprogrammable 16-bit microprocessors on a single chip. Microprogramming capability is provided by a large PLA which is included in each processor. Each of the processors is connected to each of three main buses, namely the status bus, the data bus, and the control bus. Each processor is connected to the status bus by a respective status bus multiplexer, which operates as a programmable interconnect. In accordance with the various configurations of the status bus connections which are thus possible, the processors may be operated independently (e.g. as four 16-bit processors), in lockstep (e.g. as one 64-bit processor), or pipelined. Thus, two major sources of programming flexibility are provided: the microprogramming flexibility provided by PLA interpretation, and the processor reconfiguration flexibility which is provided by the use of the programmable status bus connections and by controlling the instruction streams interpreted by each processor.

To exploit this flexibility in processor control, each chip level instruction is directed to one or more specific processors. Thus, when it is desired to operate the processors in a pipeline mode (where separate processors sequentially perform different operations on a single data stream), each processor is respectively instructed to perform the operation appropriate to its position in the pipeline sequence. In lockstep processing, one processor is designated as the master processor (to control sequencing etc.), and the other lockstepped processors are all controlled simultaneously. These modes of reconfiguration may also be combined, so that, e.g., a chip might be reconfigured to contain four independent 16-bit processors, two pipelined 32-bit processors, one 48-bit processor (three lockstepped 16-bit processors) and one independent 16-bit processor, etc. Since the control bus may be segmented to carry plural unrelated sequences of instructions, a multilevel interrupt hierarchy is used, arbitrated by a single control store manager, to arbitrate access to the control bus. The external interface controls (including an external interrupt manager, two external status ports and two external data ports) also permit processors on more than one RIC chip to be linked together in the various modes discussed above. In addition, the external interface controls also control access to external memory, I/O's, etc.

A substantial amount of on-chip RAM is provided, which may be accessed by any of the processors. However, each processor also has direct access to a primary allocation of the on-chip RAM. All processors may directly access their respective primary allocations of RAM in parallel, but, to access other portions of RAM, a processor must use the data bus, and therefore such accesses must be arbitrated. Two design expedients prevent hangups and deadlocks: first, 256 priority levels are used coincidence of priority is thereby reduced. Second, all interrupts are sent, and acknowledged, in parallel. Third, any processor which is unable to acquire all resources needed to proceed with execution releases all previously acquired resources while it is waiting for the necessary resources to become available.

In addition to these crucial elements, numerous conventional elements are also used to fully implement the design. For example, each processor includes an ALU, a barrel shifter, a memory mapper, a microsequencer, etc.

The hardware layout time of the RIC chip is reduced by a factor of almost four, since much of the structure (e.g., all four processors) is replicated.

Of course, the processors need not be 16-bit processors but may alternatively be 32-bit, 8-bit, etc. Similarly, the number of processors on a chip may not be exactly four, but may be three, or any number larger than four. In fact, the maximum number of processors is constrained simply by manufacturing technology, as smaller geometries become practicable, it might be very desirable to include large numbers of processors on a chip. In such case, the interconnections, busses, and protocols would remain the same. Of course, if the processors were other than 16-bit, the width of the respective busses would have to be changed correspondingly.

Brief description of the drawings

Embodiments of the present invention will now be described more specifically with reference to the accompanying drawings wherein:

Figure 1 shows a general overview of an embodiment of the restructurable IC according to the present invention;

Figure 2 shows a floor plan of a portion of the RIC, including one processor in its entirety and one of each kind of the external interfaces;

Figure 3 shows portions of the AND and OR portions of a DLA, embodied in a NOR gate implementation;

Figure 4 shows portions of the AND and OR matrixes of a DLA embodied in a named gate implementation;

Figure 5 shows the structure of the control bus;

Figure 6 shows the relation between the central control store controller and the four module controllers;

Figure 7 is a flowchart illustrating the operation of the central control store controller and of the respective module controller, where the control store is being accessed;

Figure 8 shows the connection of the daisy chained bus available line;

Figure 9 is a schematic diagram of major portions of the ALU within each processor;

Figures 10 and 11 respectively provide circuit diagrams of portions of functional and carry chain blocks within the ALU in each processor;

Figure 12 is a flow chart illustrating the structure of the barrel shifter within each processor;

Figures 13, 14(a), 14(b) and 14(c) show examples of shift and/or rotate operations performed by the barrel shifter within each processor;

Figure 16 shows the structure of the data bus;

Figure 17 shows the protocol of the data bus;

Figure 18 provides a block diagram of the data path within each processor;

Figure 19 illustrates schematically the internal RAM system of the RIC;

Figures 20 and 21 show the structure and operation of the respective bus control units;

Figure 22 is a flowchart showing the operation of the memory scheduling unit;

Figures 23—25 show the interconnections of the status bus, as effected by the status bus multiplexer, corresponding to different modes of reconfiguration of adjacent processors;

Figures 26, 27 and 28 show schematically the data and command instruction flows within the RIC, in the independent mode, internal lockstep mode, in pipeline mode, respectively;

Figure 29 is a block diagram of the scheduler and interrupt manager within each processor;

Figure 30 is a flowchart of the operation of the scheduler within each processor;

Figure 31 shows the format of the interrupt control word;

Figure 32 shows the format of the control store address lines, when an interrupt is being sent;

Figure 33 provides an example of interrupt timing, when processor PR3 is interrupting processor PR1;

Figure 34 provides a pin diagram of the RIC;

Figure 35 shows generally the internal interrupt data structure;

Figure 36 shows the operation of an external interrupt manager, while an interrupt is being sent;

Figures 37—41 illustrate examples of configurations which are attained by linking processors on more than one RIC chip;

Figure 42 shows the organization of four RIC chips into a cluster;

Figure 43 shows a hierarchical system, whereby many RIC chips are combined;

Figure 44 is a true representation corresponding to the multi-chip organization shown in Figure 43;

Figure 45 shows generally the operation of an interrupt level manager and busses, at an unspecified level within a hierarchy such as that shown in Figures 43 and 44;

Figure 46 is a timing chart showing the information protocol when an interrupt is in the rising phase, in a multi-chip hierarchy such as that as of Figures 43 and 44; and

Figure 47 is a block diagram of the microsequencer contained in each processor.

Description of the preferred embodiments

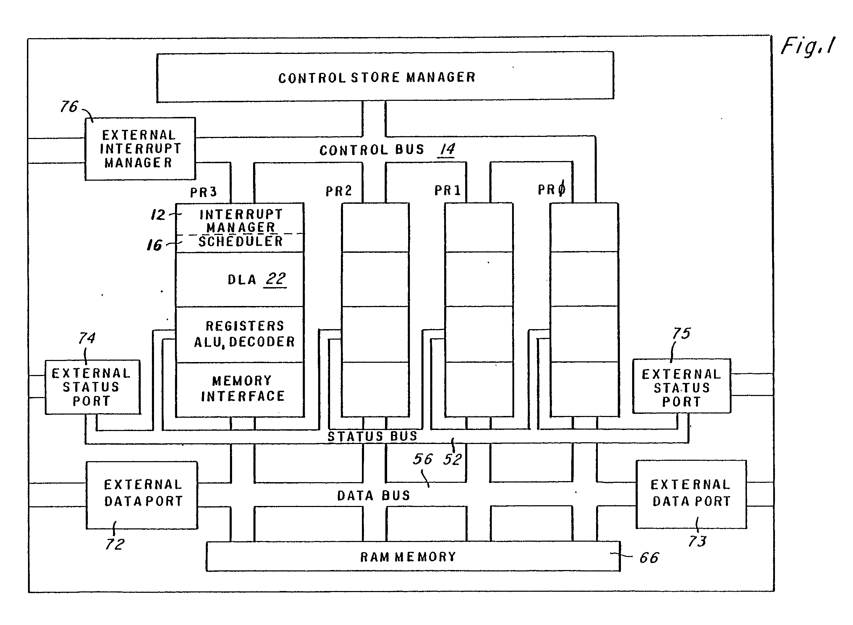

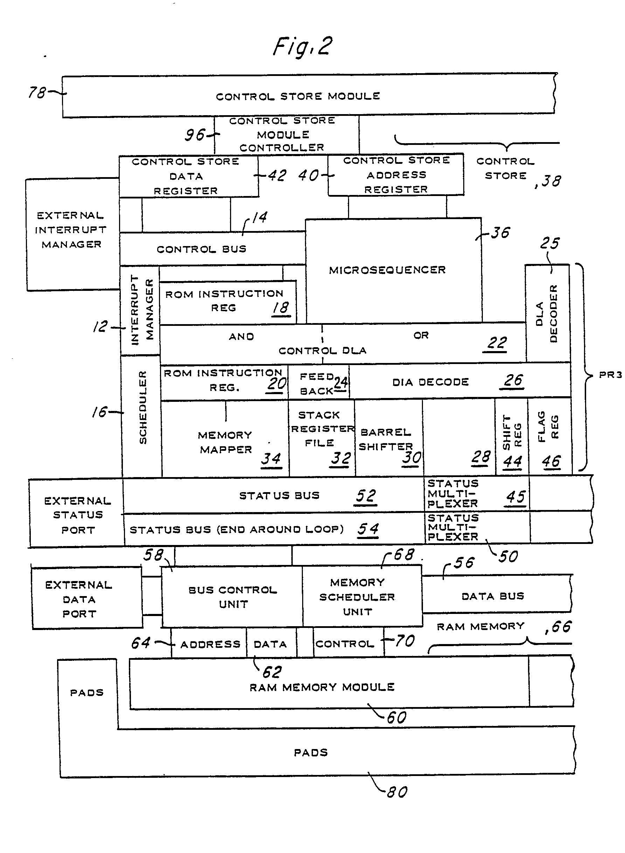

Figure 1 shows a block diagram of the restructurable IC(RIC). Four microprocessors PR0 through PR3 are provided on a single chip, and three busses 14, 52 and 56 are provided to interconnect all of the processors. External interfaces 76, 74 and 75, and 72 and 73 are is provided for each of the respective busses, and on-chip RAM memory 66 and control store 38 (Fig. 2) are also provided. A more detailed topographic view is provided in Figure 2, which shows a floor plan of a portion of the restructurable IC, including one processor (PR3) in its entirety one of each type of the external interfaces, and portions of the bus lines and on-chip memories. The interrupt manager 12 of each processor constantly monitors the interrupts which appear on the control bus 14. Only interrupts which are addressed to processor PR3 are recognized by the interrupt manager 12 in PR3. Such interrupts are then successively compared, by the scheduler 16 in PR3, to see whether their priority level is higher than that of the sequence of instructions currently being executed by processor PR3. If this is the case, it is necessary to begin execution of the stream of instructions which the new interrupt has introduced (such a stream of instructions is called a "process"). The scheduler 16 then provides a corresponding output to the DLA 22, which then enables the ROM instruction register 18 or the RAM instruction register 20, so that the control DLA 22 begins to receive the sequence of instructions contained in the "process". The control DLA 22 functions analogously to a PLA, except that its improved structure permits greater packing density, as will be discussed below. Thus the control DLA generates a substantial number of minterms in an AND matrix, and an OR matrix then converts these minterms into selected logical-sum outputs. Adjacent to the control DLA 22 is a feedback block 24, through which a few of the outputs of control DLA 22 are fed back to provide inputs to the DLA. By this means finite state machine capability is provided for the DLA 22, so that the DLA 22 can, e.g., translate one high-level instruction into a sequence of lower-level instructions. The DLA 22 is connected to decoder sections 25 and 26, which selects outputs of the DLA 22 as hardware commands for the ALU 28, barrel shifter 30, register file 32, memory mapper 34, etc. Outputs of the DLA 22 are also connected to a microsequencer 36, which controls access to the control bus 14 and to the control store 38. The microsequencer 36 can send appropriate signals on the control bus 14 to access the control store 38 through a control store address register 40. Data which is called from the control store 38 is output through a control store data register 42 to the control bus 14, and then input into the ROM instruction register 18 (if the register 18 has been enabled by the interrupt manager 12), and provided as an input to the AND section of the control DLA 22. Operation of the memory mapper 34, register file 32, the barrel shifter 30, the ALU 28, the shift register 44, and the flag register 46 proceeds according to conventional principles of operation well known in the microprocessor art.

A status bus 52, including an end around loop 54, is also provided on the chip. The status bus is connected to each processor through status multiplexers 48 and 50. Each such pair of status multiplexers operates as a programmable interconnect. The lines of the status bus 52 and 54 are used to provide synchronization of adjacent processors in the pipeline mode, or to provide complete linkage of adjacent processors in the lockstep mode. In the independent mode no such linkage is required. The pair of status multiplexers 48 and 50 is programmed to provide the appropriate status bus interconnections each time a new mode is entered.

The processor PR3 accesses the RAM memory 66 by way of memory mapper 34. Lines from the memory mapper 34 cross the status bus 52 and 54, and interface with the data bus 56 at a bus control unit 58. The bus control unit 58 operates selectively and programmably, so that the output from memory mapper 34 is either connected directly to the RAM memory module 60 to which processor PR3 has preferred access, through data register 62 and address register 64, or else is connected through data bus 56 to some other area of on-chip or off-chip memory. If it is necessary to access one of the other three modules (not shown) of the RAM memory 66, the access will be communicated through data bus 56 to the appropriate one of the other three memory scheduler units 68. Each memory scheduler unit 68 schedules memory access requests according to first-come-first-serve, and controls access to the corresponding memory module through a control register 70. In addition, the data bus 56 is connected to external data ports 72 and 73, through which each processor can access off-chip memory.

Similarly, the status bus 52 and 54 is connected to external status ports 74 and 75, so that off-chip processors may be synchronized for multi-chip lockstep and pipeline operations, and control bus 14 is provided with an external interrupt manager 76, so that commands may be sent to and received from off-chip processors.

The control store 38 is divided into modules 78, controlled by respective control store module controllers 96, analogously with the division of the RAM memory 66 into modules 60. Finally, a plurality of pads contact areas 80 are provided at the periphery of the chip, for bonding of external contacts. An 84 pin package is preferred.

The foregoing has provided a summary overview of the function and structure of the restructurable integrated circuit. A more detailed description of the chip, together with suggestions of some possible applications, will now be provided.

The first aspect of the restructurable integrated circuit (RIC) which will be described in greater detail is the control path. A crucial part in the control path is played by the control DLA 22, and the structure and operation of this DLA will be described first. The PLA used in each processor is necessarily large. The preferred embodiment requires a PLA of 40 by 400 by 120. In present production technology, a PLA of this complexity would have an area on the order of 6.25 mm², which is uneconomically large. However, process improvements reduce the required area greatly. In addition, considerable size improvement is also obtained by using a DLA (dynamic logic array) in place of the conventional PLA, as discussed above. Preferably mask-programmed DLA's would be used for large-quantity applications, but field programmable (or even electrically alterable) DLA's would also be used for initial development work and to maximize customer flexibility. The exact maximum limit on density depends on the minterm (or maxterm) products desired, but since a typical PLA only has 10% transistor density, improvement by a factor of four in a DLA realization is easily attained through "folding" minterms. A dynamic logic array (DLA) may be thought of simply as a PLA which has been improved to utilize area more efficiently. Alternatively, the DLA may be considered as a PLA which has been made restructurable at the circuit level. A DLA allows multiple functions to be embodied in a PLA, subject to the constraint that only one function can be utilized at a time. The DLA improves utilization of area by a factor of 2 to 5. Also, the DLA (with associated multiplexers) allows the inputs and outputs of a PLA to be used for multiple functions instead of only one. The DLA does this by isolating partitions of a PLA in such a way that the circuitry performing only one function is enabled, while the circuitry performing the other functions is not. Selection of an active partition within the DLA 22 is performed by the two decoders 25 and 26. In accordance with the activation of the DLA's control lines by these two decoders, the DLA is activated to form a selected logical function. Of course, some partitions of the DLA will not be controlled by these control lines. This concept can be applied to both NOR gate implementations of PLAs and to NAND gate implementations.

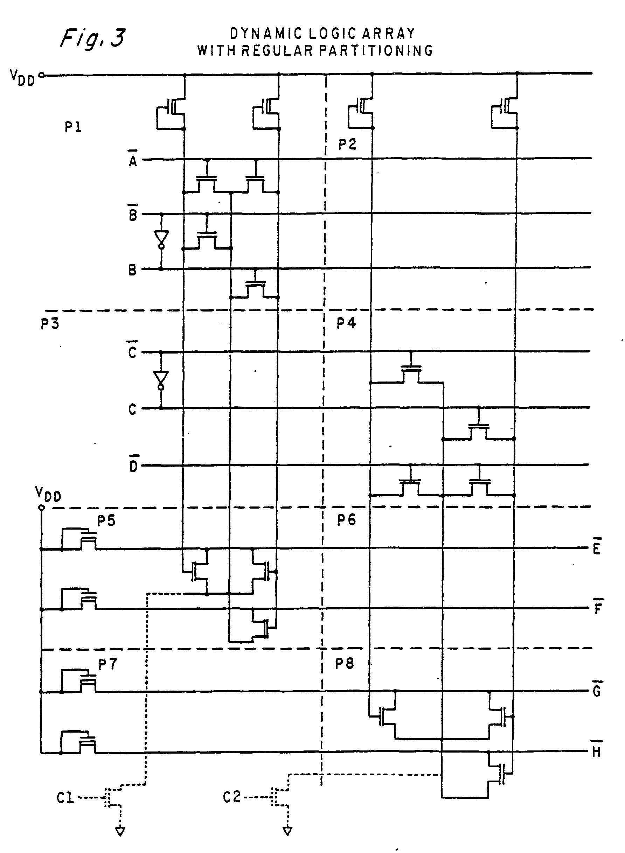

As shown in Figure 3, in the NOR gate implementation of a PLA using NMOS technology, the transistors forming gates in the AND matrix along with the transistors forming gates in the OR matrix have all sources common to ground. If the sources for the transistors implementing a particular function are floated, the circuit behaves as if these transistors had been removed, so that the function is disabled. The basic idea behind the NOR gate DLA is to connect all the transistors implementing a function to a control line, which is grounded when the function is to be performed and is floated when the function is to be disabled. To implement multiple functions in a DLA, the sources of the transistors for each function are connected to a separate control line corresponding to that function. Figure 3 illustrates a typical NOR gate DLA. The ordinary PLA circuitry is drawn in solid lines, and the additional circuitry to implement a DLA is drawn with dotted lines. The DLA is partitioned as shown by the dashed lines, and the various partitions are labeled P1 through P8. If control line C1 is at logical 1, the circuitry in partitions P1 and P5 is activated and the outputs E and F become functions of the inputs $\overline{A}$, $\overline{B}$, and B. If the control line C1 was at a 0 level, the E and F outputs would not be controlled as a function of any inputs. Additional circuitry could also be added to the P3 and P7 partitions, in order to implement another function which controlled outputs E and F as functions of inputs $\overline{A}$, $\overline{B}$ and B.

Similarly, the control line C2 in Figure 3 can activate or neutralize circuitry in partitions P4 and P8, and additional circuitry, to provide additional output functions, could be added in partitions P2 and P6.

This circuit can be generalized to any number of partitions, and the partitions can be of varying sizes. Also, the AND matrix can be separately controlled from the OR matrix.

Although Figure 3 shows the DLA as an improvement based on a static gate PLA, for clarity, the above discussion also applies to a DLA which is based on a dynamic gate PLA. The additional peripheral control circuitry required to implement a dynamic gate DLA requires only a very small increase in chip area, particularly where the PLA is large.

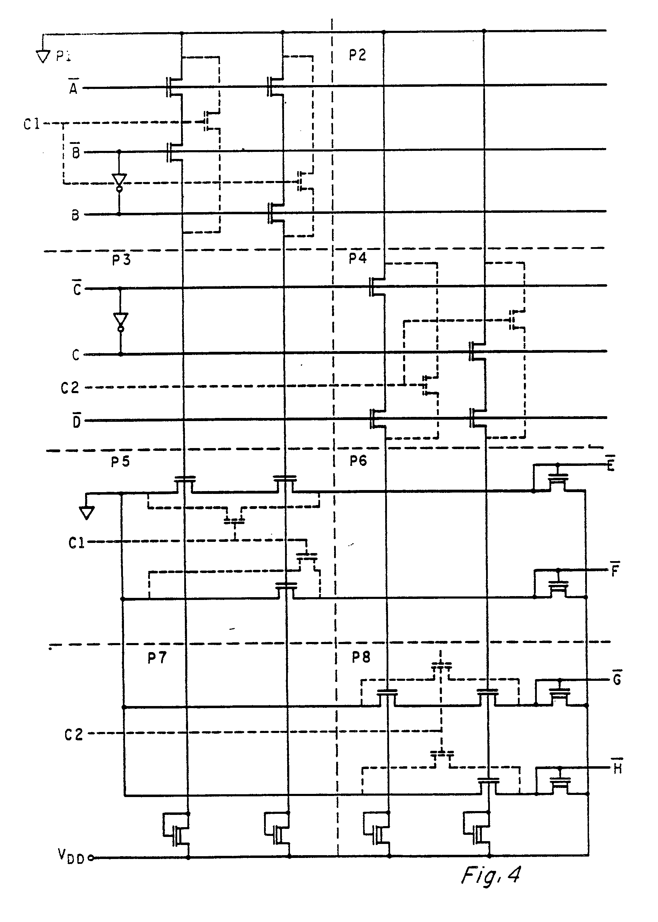

Figure 4 shows an NAND gate DLA. The concept of partitioning a PLA for implementing a selected one of multiple possible functions remains the same. What changes is the method of isolating the gates that implement the desired function. For NOR gate implementations, voltage control (of the common sources) is used. The NAND gate DLA is the current duel to the voltage-controlled NOR gate DLA. In the NAND gate DLA, all transistors except those implementing the desired function are shunted by a current bypass, which is controlled by a control line. Only the transistors which implement the desired function are not so shunted. It is also possible to configure a DLA which generates maxterm rather than minterm products, but the area economies remain the same.

Use of a DLA for interpretation permits the interpretation system of each processor to be rapidly reconfigured, by selecting one of the modes of operation of the DLA. The DLA 22 will preferably be mask-programmed, although more expensive field-programmable structures are also useful for user development.

Thus, the use of the control DLA 22 has provided the sophisticated microprogramming capability which is required in each processor. The path by which macro-instructions are provided to the DLA as inputs will now be traced.

The DLA 22 can also be used to provide real-time capability, simply by connecting a real-time input to one of the input lines of the DLA, and ANDing that input with the appropriate outputs of the DLA.

The structure of the control store and control bus, and the interrupt control system used, will now be described.

In one embodiment, the central control store is accessible to and can be shared by all four processors. The currently preferred alternative is to allocate the control store 38 among the processors, like the allocation of the data storage among the processors, while still permitting each processor to access any portion of control store 38. The four microsequencers 36 do not permit parallel access, but simply permit a low average access time. Of course, the microsequencers 36 can also be constructed (like the bus control units 38) to permit parallel access, but this would impose additional circuit complexity without corresponding advantages. A central and sharable control store provides the following advantages: the memory space is more efficiently utilized, since code used by multiple processors is not replicated; the amount of control store assigned to each processor can be better tailored to its needs; and field programming is practical because of memory centralization. Of course, to prevent the single channel of access to the central control storage from becoming a system bottleneck, the level of instructions stored in control storage should be sufficiently high that, on the average, each processor requires four or more complete clock cycles to execute each single instruction received from control storage. Since, in current microprocessor software structures, one assembly-language instruction will typically require, on the average five to ten cycles, the above constraint on the level of instructions should be very easily satisfied.

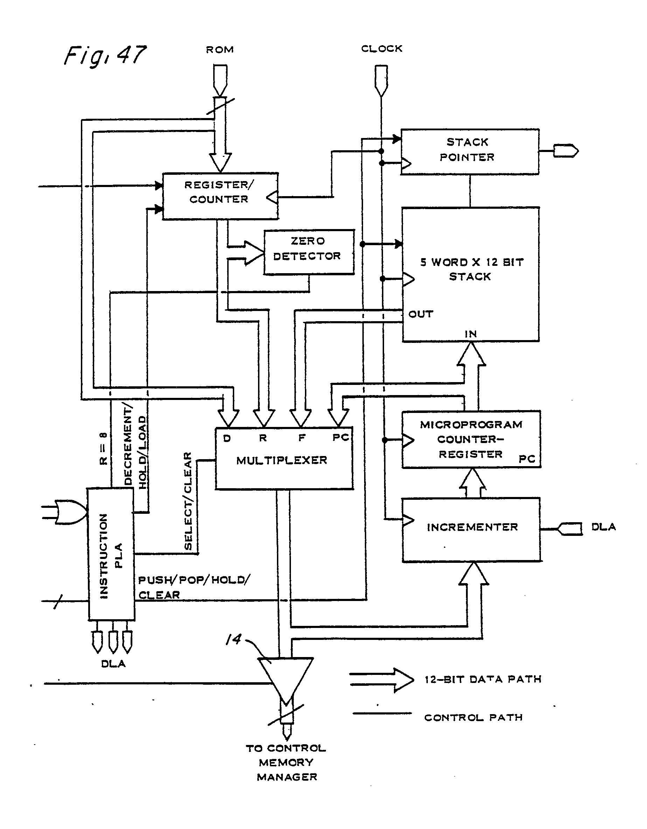

The microsequencer 36 is an address sequencer intended for controlling the sequence of execution of microinstructions stored in the ROM memory. Besides the capability of sequential access, it provides conditional branching to any microinstruction within its 14-bit range or 16K word range. It also provides the last in and first out stack which provides micro-subroutine return linkage and looping capability. There are 4 to 8 levels of microsubroutines. It also has a microinstruction loop counter within the address range. Other details of the preferred embodiment of the microsequencer 36 will be obvious to those skilled in the art, and are shown in greater detail in Figure 47.

The central control store structure implies a central shared control bus. The control bus 14 arbitrates the use of the control store 38 among the four processors PR0—PR3, carries addresses from the processors, and carries microinstructions from the control store 38 to the processors. The control bus 14 includes 73 lines, which run nearly the length of the chip. Thus, the bus is an expensive resource, and it is desirable to fully use the bandwidth of the bus. That is, the bandwidth of the control bus is approximately matched to the throughput of the control store 38 and the microstore access rate of the processors.

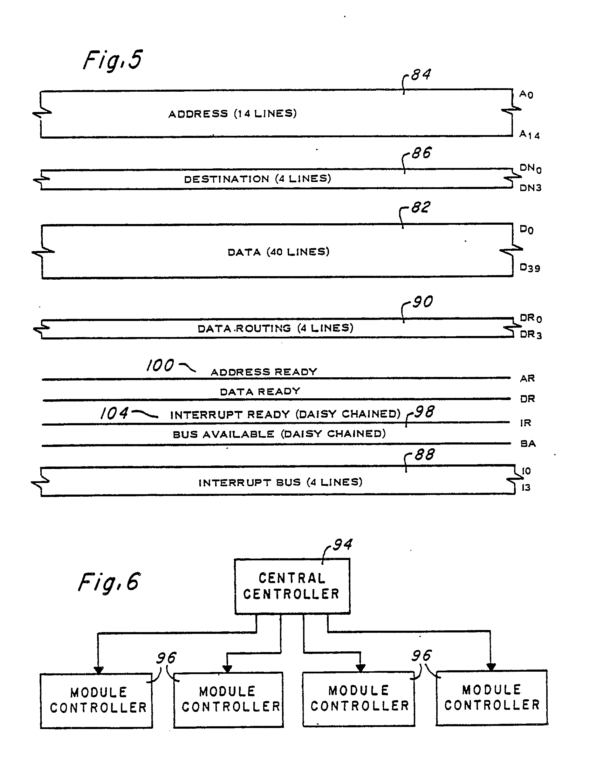

The structure of the control bus 14, according to the currently preferred embodiment, is shown in Figure 5. The control bus 14 includes a control data bus 82, an address bus 84, a destination bus 86, an interrupt bus 88, and a data routing bus 90. A control data bus 82 carries microinstructions fetched from the control store 38 to the processors PR0—PR3. This bus is 40 lines wide. The address bus 84 carries addresses generated by the microsequencers 36 in the respective processors to the control store 38, to fetch microinstructions. As explained below, the address bus 84 also carries priority information during interrupts. This bus is 14 lines wide, allowing 16K words of address space in the control store 38. The destination bus 86 is used, whenever a processor accesses the control store 38, to indicate which one or more of the processors PR0—PR3 and the external interrupt manager 76 are to receive the data which is stored at the address in control store 38 which is concurrently being accessed. The destination bus 86 is also used during interrupts, to identify which of the processors PR0—PR3 and the interrupt manager 76 are to receive the current interrupt (i.e., the interruptees). The destination bus 86 is 5 lines wide. The interrupt bus 88 is used to transmit the source of an interrupt. It is also used for interruptee processors to signal whether the interrupt is the highest priority task they have on hand, i.e. to signal whether the interruptee processor will accept the interrupt or not. This form of reply is needed to quickly establish (or postpone) processes which require pipelined or lockstep operation. Interrupt bus 88 is 5 lines wide. The data routing bus 90 is controlled by the control store manager 92, and is used to indicate which processor or processors PR0—PR3 are to receive the microinstruction currently being transmitted on the control data bus 82. The data routing bus 90 is 5 lines wide. Lines DR0—DR3 are used to designate the corresponding processor(s) PR0—PR3 as destinations of words fetched from ROM or for interrupts. Line DR4 is used to designate the external interrupt manager as the designation of a fetched ROM word or interrupt.

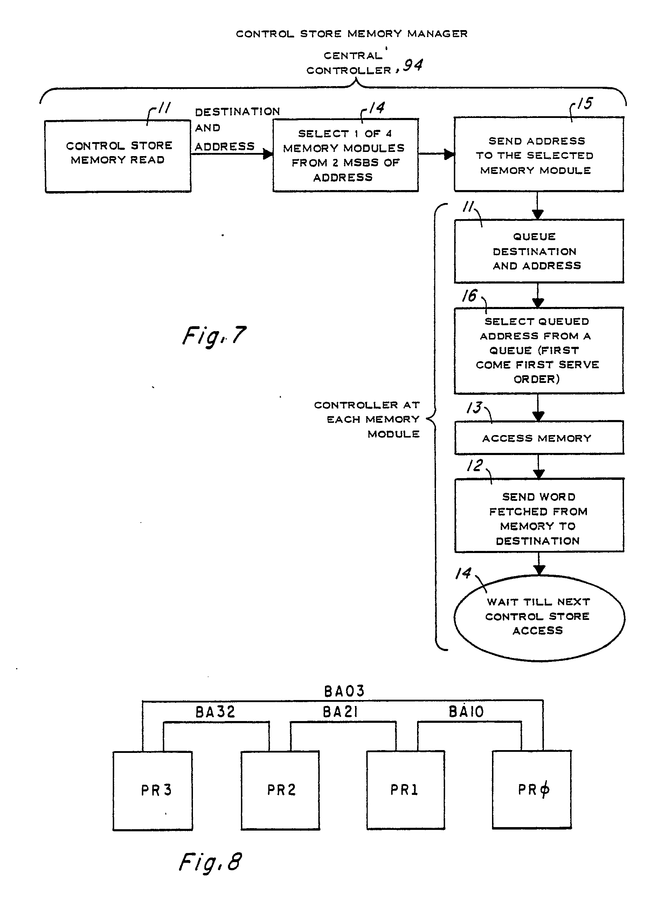

As shown in Figure 6, the control store manager 92 is organized as a central controller 94 and four control store module controllers 96. Figure 7 is a flow chart showing the operation of the control store manager 92. When the control store manager 92 is activated, it receives the destination and control address information from the buses 86 and 84 respectively. It then selects one of the four control store modules 78 within the control store 38, in accordance with the two most significant bits of the address information which it receives on the address bus 84. The address is then sent to the appropriate module controller 96. The preceding functions in the flow chart of Figure 7 have been performed by the central controller 94, and the remainder of the functions shown are then performed by the appropriate module controller 96. The module controller 96 now queues the address and destination for the requested access, and reads out the control words which have been requested in FIFO order.

Arbitration of the control bus 14 is achieved by means of the bus available line 98, which is daisy chained among the processors PR0—PR3. When one processor gains control of the control bus 14, it uses the control bus for only one full cycle. (One phase to send an address, and a second phase, not necessarily consecutive, to receive the data). During the first phase, the processor which has control of the bus 14 holds the bus available line 98 down. After the address is sent, that processor raises the bus available line 98. Since the line is daisy chained, the high state of the bus available line 98 is immediately received by only one processor, which then either accesses the control memory or raises the next link of the daisy chain of the bus available line 98. In the case where one processor is utilizing the control bus and the bus available line is circulated back to it during the cycle, (i.e., no other processor wants to use the control bus) the processor utilizing the bus will trap the signals and reissue it to maintain proper synchronization of the control bus. Thus round-robin arbitration of control bus access is provided. In similarly conventional fashion, the address ready line 100 and the data ready line 102 are used to synchronize communications between active processors and/or the control store manager 92. Other data ready line and address ready line are used to disseminate between addresses and data during interrupt transmission).

Finally, the control bus 14 also contains an interrupt ready line 104, which is also daisy chained. The daisy chaining permits round-robin arbitration among processors seeking to send an interrupt. When a processor gains control of the control bus 14 to initiate an interrupt immediately, it sends a zero down the daisy chained interrupt ready line 104. A processor sending an interrupt can take over the interrupt bus 88 before gaining the control address bus 84. When an interrupting processor gains control of the destination bus 86, it raises the lines within the destination bus 86 that correspond to the processors on the external interrupt manager 76 which are the destinations of the interrupt being originated. After issuing the interrupt, the originating processor signals that it is the source of the interrupt on the interrupt bus 88.

After an interrupt is initiated, other interrupts are inhibited for at least two bus cycles: one for the interrupt to be sent, and one for the replies from the receiving processors (the interruptees) to be received by the originating processor (the interruptor). If only buffering of the interrupt is required, the interruptee's interrupt manager will be able to process the interrupt and be ready to receive another interrupt after one to four additional bus cycles. If the receivers of the interrupt are to become engaged in a lockstep or pipeline process, i.e., if a context switch is necessary, the interrupt bus 88 is blocked for the time it takes to perform the necessary context switch. The length of the context switch depends on how much context (i.e., register contents ALU status, etc.) within the interrupted processor is to be retained. As will be discussed below, some context switches may require an essentially complete change of processor context, while others may require only a minimal change. The shortest context switch will normally require three or more bus cycles. This delay does limit the bandwidth of interrupt signals, but this approach seems reasonable because interrupts are not expected to take up the full available bandwidth. This delay serves the purpose of smoothing out bursty interrupt occurrences without reducing the average rate of the interrupt traffic over the long run.

An interrupt is used to commence each sequence of instructions (each "process"). As discussed above, the interrupt specifies a priority level, and also contains a four bit code conveyed on the data routing bus 90 specifying which processors it is addressed to. If all of the processors addressed by the interrupt are available (that is, have no higher-priority tasks on hand), execution of the sequence of instructions within the process begins. If the instructions to be executed are located in control store 38, they are sequentially read out by the appropriate microsequencer 36. If the instructions to be executed are located in RAM memory 66, they are sequentially read out by the appropriate memory scheduler unit 68 and bus control unit 58 from RAM memory, and the memory mapper 34 within each affected processor transmits these instructions, through the RAM instruction register 20, to the DLA 22. The DLA 22 can translate these RAM instructions into ROM addresses, and these ROM addresses are then accessed via the microsequencer. Also, the RAM instructions can be directly decoded by the DLA 22. The control words stored in ROM do not contain processor specification fields, but are merely short bit strings (preferably 32-bit), of which the only fixed format portion is an op code. When the control word which has been called from ROM is returned to the processor's DLA 22, the control word, together with any constants or operands which may have been specified by the instruction received from RAM, is interpreted by the DLA 22. The DLA interprets the remainder of the control word field in accordance with the opcode and the control word as, e.g., an operand field, a constant field, a microsequencer command, a memory interface instruction, a status bus command, destination and priority data (if the command is an interrupt), commands for control of the interrupt manager, the scheduler, the barrel shifter, etc. The appropriate portions of the command word are then decoded and provided directly to the appropriate hardware, by the DLA as controlled by decoders 25 and 26.

Of course, this microprogramming interpretation structure also permits use of further stages of interpretation before hardware execution. For example, a command read out from the control store 38 may be interpreted to require execution of another series of instructions from control store 38 or from RAM 66. Moreover, off-chip memory may also be used for instructions. For example, if a single command in an application language is to represent a very lengthy subroutine, the corresponding control word in the control store 38 might be interpreted to command loading of the subroutine in a specified block of RAM memory 66, and subsequently executing the instructions of that subroutine sequentially. Of course, instructions stored in off-chip storage can be fetched and executed through the external interrupt manager 76 and/or the external data ports 72 and 73, as will be discussed in greater detail below.

Further information regarding the interrupt protocols will be provided below, where reconfiguration of the RIC into different modes of operation is discussed in connection with the status bus operation. At this point, further details regarding the structure of each processor PR0— PR3 will be provided.

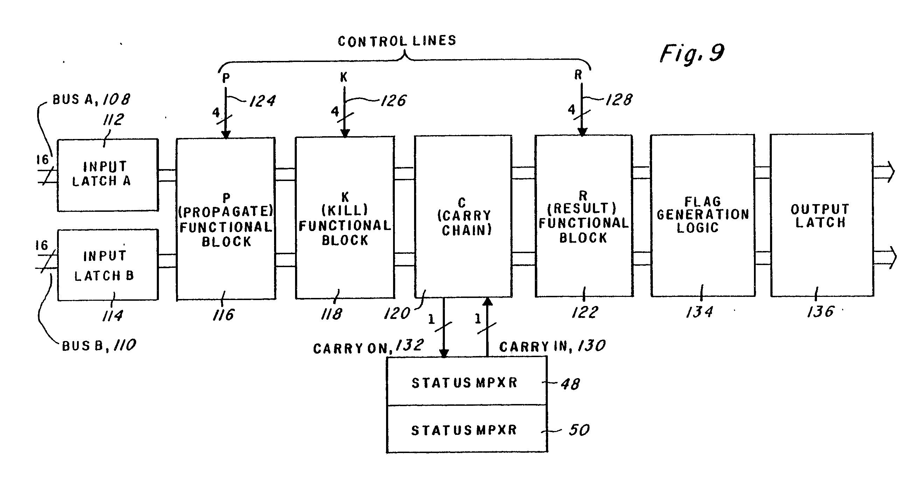

As seen in Figure 2, each processor includes, in addition to the DLA 22 and associated decoders 25 and 26, feedback lines 24, and instruction registers 18 and 20, an interrupt manager 12, a scheduler 16, a memory mapper 34, a stack/register file 32, a barrel shifter 30, an ALU 28, a shift register 44 and a flag register 46. The latter elements are conventional, but will be discussed in greater detail for convenience and clarity. For example, Figure 9 shows greater detail of the ALU 28. Two busses 108 and 110 are provided as inputs from other blocks of the processor, e.g. barrel shifter 30. The busses are connected via input latches 112 and 114 respectively, to a P (propagate) functional block 116, a K (kill) functional block 118, a C (carry chain) block 120, and an R (result) functional block 122 successively. The propagate block is controlled by P control lines 124, the kill block is controlled by K control lines 126, and the result block is controlled by R control lines 128. These control lines are provided to the ALU 28 from the DLA 22. In addition, a carry in line 130 and a carry-out line 132 are provided, to connect the C block 120 to the status multiplexers 48 and 50 (the operation of the status multiplexers 48 and 50 is discussed in greater detail below in connection with the status bus protocol). The output of the R block 122 is a dual bus, which is provided through a flag generation logic 134, to an output latch 136. The flag generation logic 134 computes status and error information to provide a program status word through the DLA. The flag generation logic 134 (in the DLA 22) is connected to the flag register 46, and the output latch 136 is connected to the shift register 44. The shift register 44 is, in turn, connected through busses A and B (108 and 110) to the register file 32 or, through memory mapper 32, to the bus control unit 58, so that the output of the ALU may be transmitted on the data bus 56, or stored for future operation within the processor.

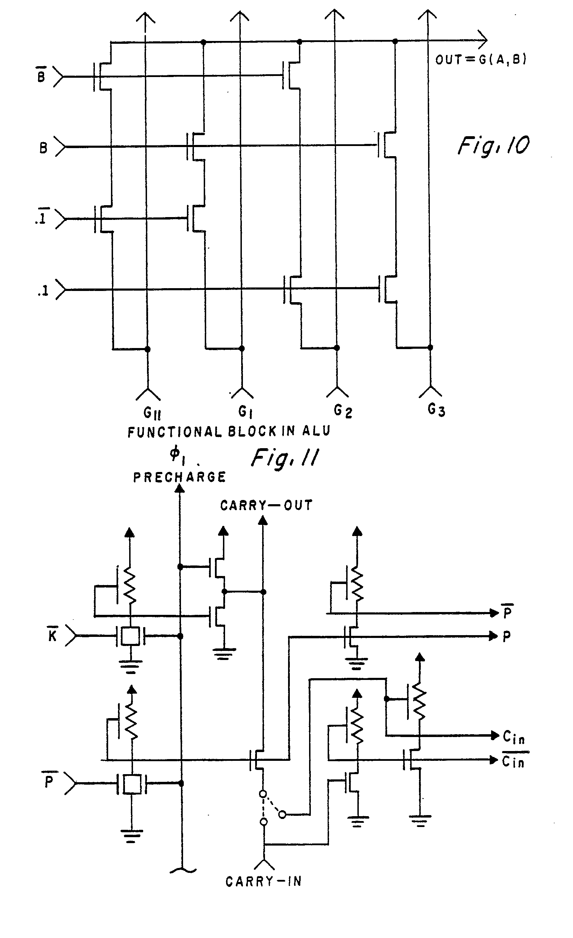

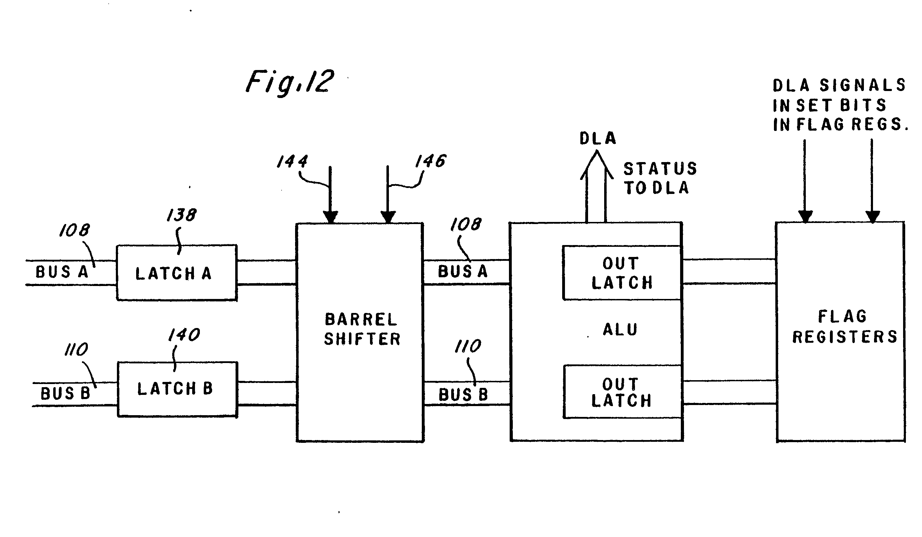

Figure 10 shows the component-level architecture of one portion of one of the functional blocks 116, 118, or 122 within the ALU 28. Figure 11 shows the structure of one portion of the carry chain block 120 within the ALU 28.

Figure 12 shows a schematic diagram of the data path. Input signals are provided on busses 108 and 110, to which are connected respective input latches 138 and 140. These latches provide input to a barrel shifter 30. The barrel shifter 30 is controlled by control lines 144, and parameter inputs 146, which are both supplied by the DLA 22. The parameter inputs 146 provide values for, e.g., shift count and for extraction boundaries.

The barrel shifter 30 provides outputs, to bus A and bus B. The ALU generates arithmetic status signals such as carry, overflow, negative and/or zero. The ALU also generates other trap signals such as integer overflow, decimal digit carry etc. These signals are sent to the DLA which performs logical operations upon them to generate signals which set bits in the flag register. This mechanism generates the setting of status signals for the circulation of a computer architecture for example.

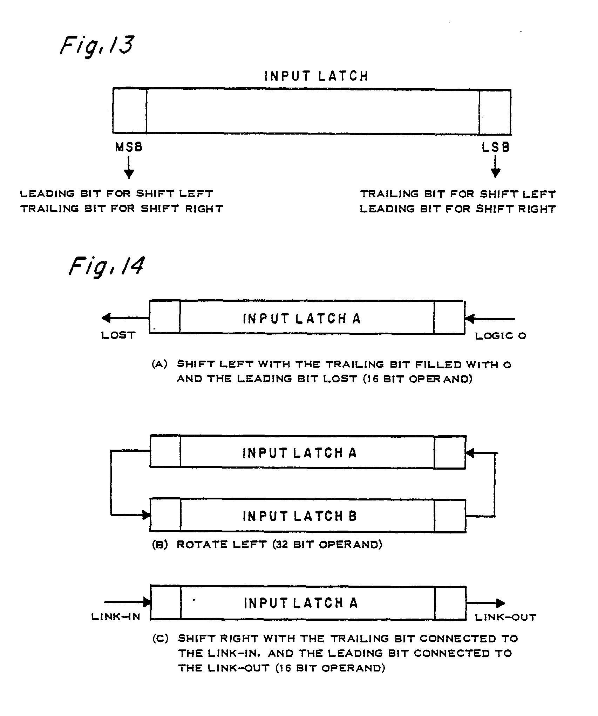

Figure 13 illustrates the terminology of shift operations formed by the barrel shifter 30. Conventionally, a shift left is used to designate a shift toward the most significant bit; i.e., the most significant bit is the leading bit for a shift left. Similarly, the least significant bit is the trailing bit for a shift left, and is the leading bit for a shift right. Figures 14a, b and c illustrate some further examples of shift operations. Figure 14a shows a shift left, where the trailing bit is filled with a zero, and the leading bit is discarded.

Figure 14b illustrates a rotate left operation, the significant bit of input latch A (138) is mapped into the least significant bit of input latch B (140), the most significant bit of input latch B (140) is mapped into the least significant bit of input latch A (138), and the other bits are shifted accordingly. Figure 14b illustrates a one-bit rotate operation, but a rotate operation may move up to 16 bits, right or left, within one clock cycle in the barrel shifter.

Figure 14c shows a shift and link operation, where the input latch 138 is shifted right, a link-in line 152 provides the new contents of the trailing bit, and the contents of the leading bit are output over the link-out line 154. In the preferred embodiment, the link-in and link-out lines 152 and 154 are provided by input latch B (140), so that multi-bit shift-and-link operations may be performed, but separate link-in and link-out lines may alternatively be provided.

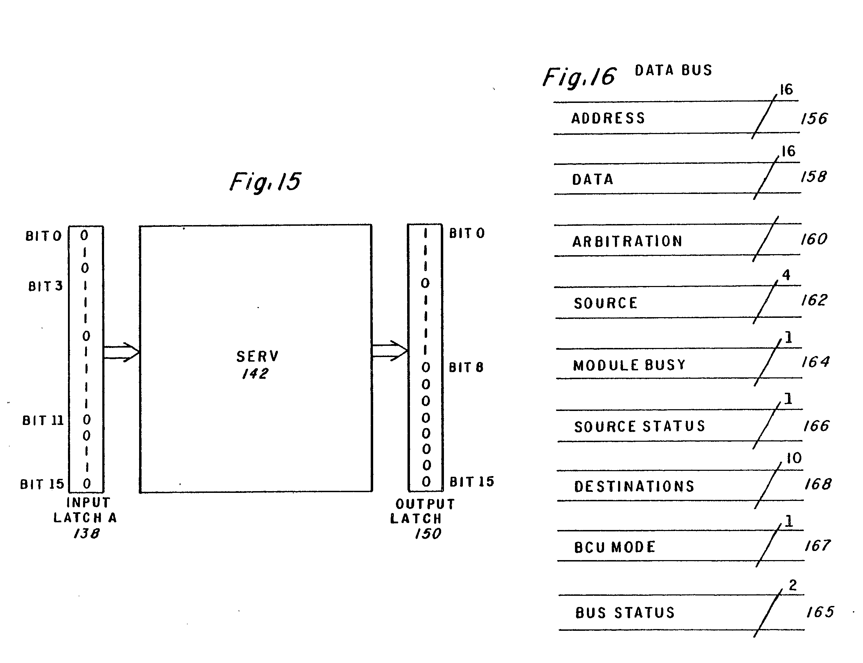

Figure 15 illustrates the extraction operation which is performed by the barrel shifter 30. In the illustrated operation, the barrel shifter 30 has been commanded to extract bits 3—11 of the input, and these bits are then provided as the leading bits at output latch 150. The circuitry required for a barrel shifter 30 to perform these functions as well known.

The memory mapper 34 is merely a familiar structure which forms a function familiar in processor architecture. A virtual address received by the memory mapper 34 is compared in parallel, by an associative memory operation, with 16 stored virtual addresses. If the virtual address received matches one of the stored virtual addresses, the corresponding local address is used to fetch the desired word from local memory. If there is no match, the virtual address will be translated through a table lookup (such as a page table lookup) to determine the real address, and can optionally be loaded into one of the register files. By this means the memory mapper 34 distinguishes between memory units stored internally and memory units stored externally. The memory mapper 34 thus permits hashing table searches, and the hashing function used to select a location in the hash table is firmware programmable. The hashing table is implemented as a multiway set associative memory. The output of the hashing function points to multiple locations to be searched in parallel. If the desired address does not match the comparison made at the multiple locations in the hash table, no other probes are necessary since the desired address is (by design) not in the table. Thus this mapping function maps memory units of varying size. If the hashing function is used to support a cache, the hash table entries will point to memory units of tens of bytes. If the hashing function supports a virtual memory translation lookaside buffer, the memory units will be 512 bytes to 2,048 bytes typically. An appropriate structure for the memory mapper would be that contained in National Semiconductor chip No. 16082.

The interrupt manager 12 directly receives all interrupts transmitted over the control bus 14. (The interrupt protocol is discussed in greater detail below). The interrupt manager tests the appropriate destination bit in each interrupt, to see whether its own processor is an interruptee, and, if the address is appropriate, compares the priority of the new interrupt with the priority of the process currently being executed. If the new process has higher priority, the interrupt manager accepts the interrupt, and otherwise the interrupt manager 12 rejects the interrupt by pulling down the wire-ANDED line.

The scheduler 16 buffers interrupts by priority in a 256 bit shifter register. When a process is active, the scheduler 16 scans through the shift register to find the process with the next highest priority. When the current process is finished or is timed out, the scheduler 16 uses the priority of the next highest priority process to access a table which contains a pointer to that process's context. The appropriate context is then recalled from a stack/register file 32, from RAM memory 66, or from external memory.

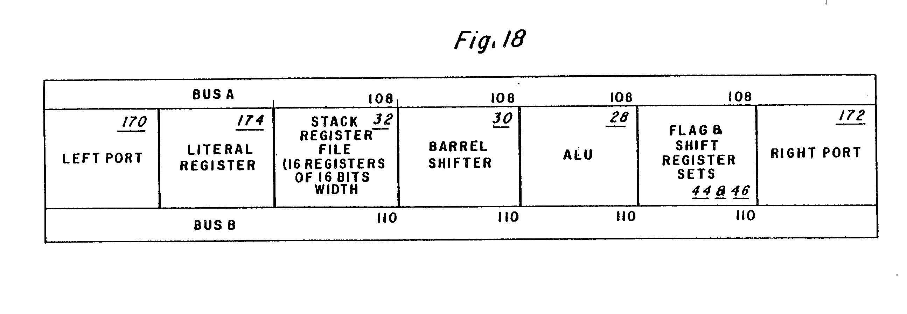

Figure 18 provides a general overview of the data path discussed above. Busses A and B (108 and 110) flank the principal components of the data path, namely the stack/register file 32, the barrel shifter 30, the ALU 28, and the flag and shift register sets 44 and 46. In addition, the left port 170 is provided at the input and output ends of the data path. Although not in the preferred embodiment, there is alternative provision for a right port 172. This right port of one processor can be used to connect to a left port of an adjacent processor. For example, the right port of processor PR3 can be connected to the left port of processor PR2. A literal register 174 is also provided for generating constants. Input is provided to the left port 170 from the memory mapper 34, and the output from the right port 172 is also routed through the memory mapper 34.

The stack/register file 32 must be a dual port register file, in order to adequately utilize the two busses 108 and 110. Otherwise the register file 32 is completely conventional.

The organization of the data bus 56 will now be described, together with the operation and structure of the RAM memory 66, the bus control unit 58, and the memory scheduler unit 68.

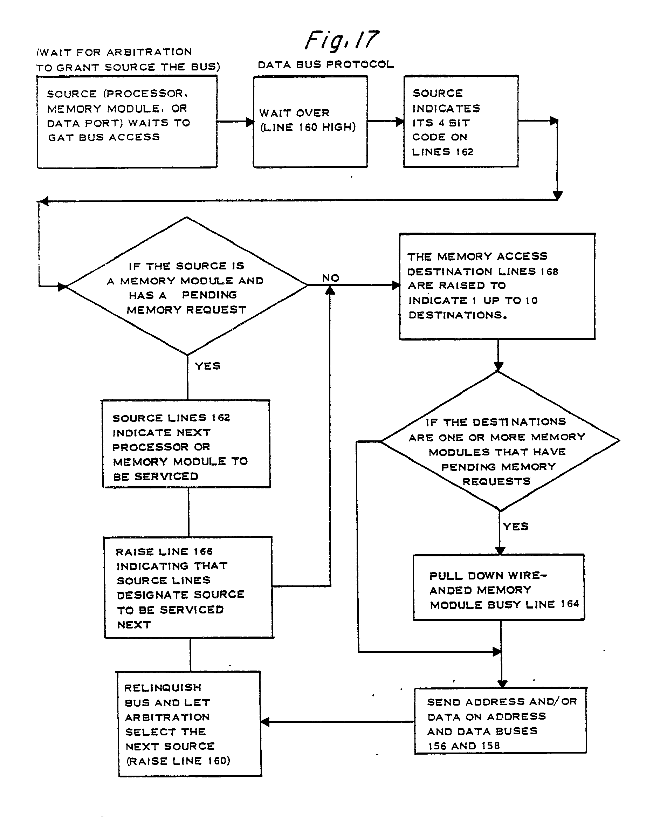

Figure 16 indicates the structure of data bus 56. The data bus 56 includes 16 address lines 156, 16 data lines 158, a round robin arbitration line 160, 4 source lines 162, a module busy line 164, a source status line 166 and a BCU mode line 167. The separate address and data lines 156 and 158 permit a data access operation to take place within one single bus cycle, at least where the speed of memory access permits this, as where the on-chip RAM memory 66 is being accessed. Alternatively, the address and data lines 156 and 158 could be multiplexed to save space. A round robin arbitration line 160 is daisy chained among the four processors PR0—PR3, the four memory modules 60, and the external data ports 72 and 73, so that access to the data bus 56 is efficiently arbitrated. The four source lines 162 specify the processor, module, or data port which is the source of the memory access request currently being conveyed. Alternatively, in accordance with the status of control line 164, the source lines 163 may be used to indicate which memory module 60 is going to be serviced next by the memory module. The 10 destination lines 168 indicate which processor, module, or port will receive the data. The source status line 166 shows (if low) that the source lines 162 indicate the processor, module, or data port whose memory request will be serviced next. The high state of source status line 166 simply shows that source lines indicate the current source. There are also two bus status lines 165 to indicate if the bus is idle, used for reading memory or used for writing memory.

The flowchart of Figure 17 provides further clarification of the utilization of the lines within the data bus 56. Once any source (a processor PR0—PR3, a RAM memory module 60, or a data port 72 or 73) receives access to the data bus (i.e., once that source receives a high signal on the daisy-chained line 160), the source indicates its four bit code on lines 162. If the source is a RAM memory module 60, and if the corresponding memory scheduler unit 68 has a memory request pending, the source lines 162 are driven to indicate which processor or memory module will be serviced next, and line 166 is raised. After this, or in any case if the source was not a memory module subject to a pending memory request, the memory access destination lines 168 will be raised to indicate any combination of 10 destinations for the data to be read out. An interlock is also provided to protect data integrity: if the destinations include one or more RAM memory modules 60 which have pending memory requests, the busy line 164, which is wire-ANDED, is raised to avoid concurrent reading and writing in the same memory space.

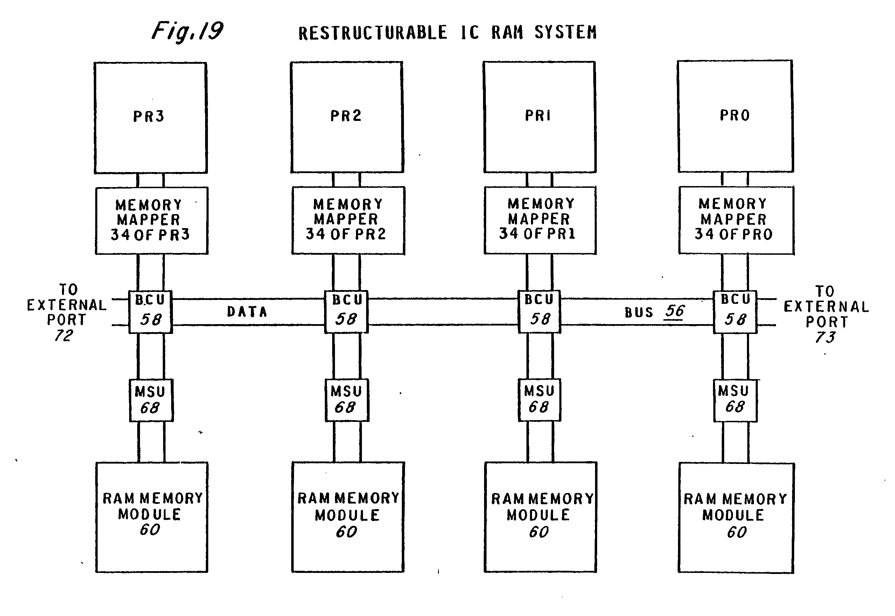

Figure 19 provides a general overview of the organization of the RAM system in the RIC. Each processor PR0—PR3 is connected, via its memory mapper 34, to a bus control unit (BCU) 58, which provides interface with the data bus 56. Each BCU 58 is also connected to a corresponding memory scheduler unit (MSU) 68, and each BCU 58 and MSU 68 are both connected to a corresponding RAM memory module 60.

When a processor accesses its own memory module 60, the processor is directly connected through its BCU 58 to its MSU 68. The MSU 68 indicates whether there are pending memory requests. If there are no pending memory request, the access occurs immediately. If accesses are pending, the MSU 68 queues a tag indicating which processor or data port first requested memory service. An MSU 68 queues the request according to a first come first served scheduling discipline. When a particular request reaches the head of the queue, the MSU 68 signals this to the processor or data port. The processor or data port then reissues its request, and the memory access is performed immediately. When a processor accesses a memory module other than its own, the bus control units 58 must be configured to permit communication via the data bus 56. Thus, for example, if processor PR3 is to access the memory module 60 corresponding to processor PR1, the bus control unit 58 corresponding to PR3 must be configured to connect processor PR3 to the data bus 56, the BCU 58 corresponding to processor PR2 must be configured to transmit communications along the data bus 56, the BCU 58 corresponding to the processor PR1 must be configured to connect the data bus 56 (in the direction of processor PR3) to the RAM memory module 60 which corresponds to the processor PR1. As discussed above, the processor must first wait for access to the shared data bus 56, which is scheduled in round robin order. After a processor gains access to the bus, it transmits the memory information and a destination tag indicating the destination memory module. Any memory module can have at most six requests pending, since each processor or data port can have only one memory request pending at a time. The memory interface of each processor contains circuitry to monitor the memory control signals which are communicated over the data bus 56. This function is performed by the memory mapper 34.

The internal RAM memory of the RIC is preferably 16K bytes of dynamic RAM, in an NMOS RIC (using CMOS realization of high-power components such as bus drivers) with a minimum geometry feature of one micron (lambda=.5 microns).

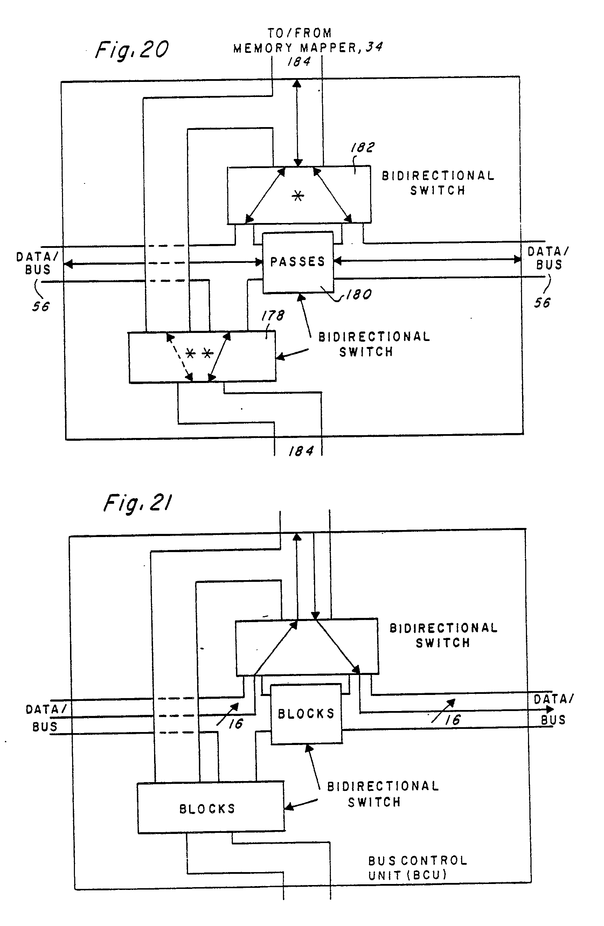

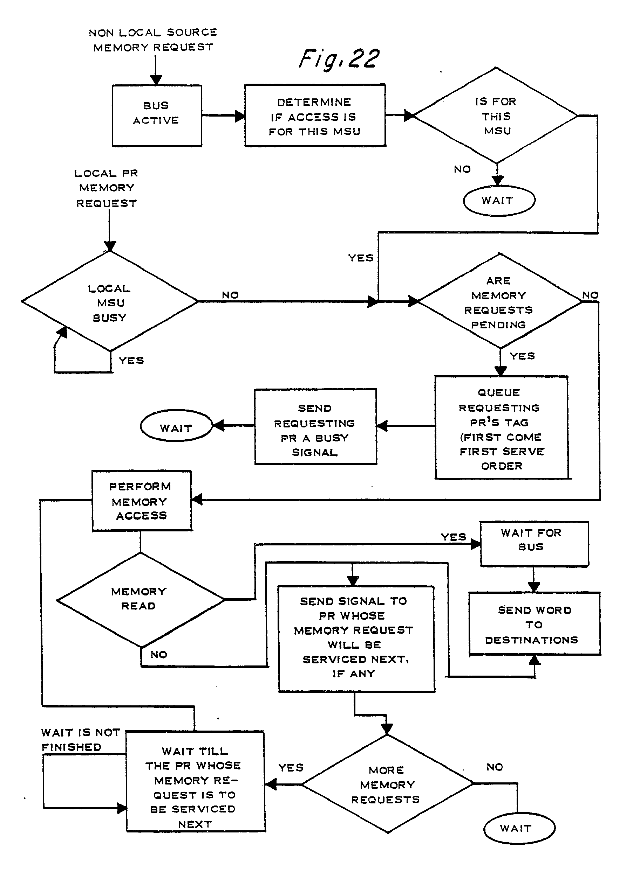

Thus, the BCUs 58 play a crucial role in permitting all processors to access the respective adjacent memory module 60, while also permitting each processor to access any other remote memory module over the data bus 56. The structure of a BCU is shown in Figures 20 and 21.

Each BCU includes three bidirectional switches 178, 180, and 182. A short bus 184 is connected from the BCU 58 to the memory mapper 34 of the respective corresponding processor, and a second short bus 186 is connected to the address and data registers 62 and 64 of the corresponding module 60. The bidirectional switch 178 is connected to both of these short busses, so that, in one position, the bidirectional switch 178 simply serves to connect the memory mapper 34 directly to the registers 62 and 64, so that each processor can access its corresponding memory module 60, in parallel. The other position of bidirectional switch 178 serves to connect the MSU 68 (via short bus 186) to the data bus 56. Similarly, bidirectional switch 182 either blocks data flow (when the corresponding processor is accessing its own corresponding memory module), or simply connects the short bus 184 directly to the data bus 156, or directionally connects the short bus 184 to the two segments of data bus 56 which are isolated when bidirectional switch 180 is in the blocking mode. This mode of operation is shown in Figure 21, and permits operation of the RIC in the pipeline mode, where each processor receives a data stream from an earlier stage of operation, and contemporaneously provides an output stream of data to the following stage of operation. Thus, the pipeline mode requires parallel transmission of different streams of data between respective pairs of adjacent processors, and this capability is provided by the blocking mode of bidirectional switch 180 and by the directional connection provided by directional switch 182.

When a processor accesses a remote memory module, three different configurations of the BCUs may be necessary. For example, if processor PR3 accesses the memory module 60 corresponding to processor PR0, the BCU 58 at PR3 must connect PR3 to the data bus 56, the BCU 58 corresponding to processor PR0 must connect the data bus 56 to the corresponding registers 62 and 64, and the intermediate BCUs 58 must simply permit clear operation of the data bus 56. In the presently preferred embodiment, the necessary coordination of BCUs 58 is accomplished by BCU mode control line 167 in the data bus 56. When any processor has taken control of the data bus, that processor can then control all BCUs, using the BCU mode line 167. When the arbitration lines 160 indicate that a processor has taken control of the data bus 56, the only necessary conditions which must be imposed on all BCUs 58 are that the bidirectional switches 180 must not block the data bus 56. In addition, the bidirectional switches 178 in each BCU 58 are operated to connect the data bus 56 to the registers 62 and 64. Thus, each address register 64 receives the requested address, and the appropriate MSU 68 then operates the control register 70 of its memory module 60 to provide the data requested.

While the above system for controlling the BCUs 58 is not the most efficient possible, it does avoid interprocessor interference at a minimum requirement in additional control lines. Preferably, each MSU 68 is directly connected to Bus status lines 165 of the data bus, to receive the read/write and enable bits needed for RAM control register 70. Each MSU 68 is also provided with two direct lines to its corresponding processor, to provide RAM control data for local accesses without using data bus 56.

The memory scheduling unit (MSU) 68 operates as shown in Figure 22. Whenever the data bus 56 is active and the BCU mode control line 167 has been activated, the MSU looks at the leading bits of the address lines 156 to determine whether the access is for the memory module 60 which this MSU controls. If so, the next decision is whether memory requests are already pending. If so, the number of the latest requesting processor or data port it queued in first come first serve order. Since at most six sources (four processors and two data ports) will need to be queued, a small shift register will accomplish this. Similarly, a memory access requested by the local processor is deferred, and a busy signal returned, if other memory requests are already pending. When a memory read is performed, it is necessary to wait for the data bus 56 to become available, and then to send the data word to the destinations which have been designated over the ten destination lines 168. If a write is performed, no return signal is required. In either case, the MSU 68 simply pulls the next pending memory request off the queue register, and sends a signal to that source to notify it that memory access is now available. The MSU 68 now waits until the next source reissues its request, and then enables the appropriate memory access, as noted above.

As will be obvious to those skilled in the art, an address register 64, a data register 62, and a control register 70 are provided as interfaces between the MSU 68 and the corresponding memory module 60.

In the presently preferred embodiment, each memory module is addressed with a 16 bit address. This allows for eventual growth of up to 64K bytes of directly addressable space for each of four processors. However, a processor supports two types of addresses: 16 and 32 bits. Sixteen bit addresses are used to directly access a processor's own memory module. Thirty-two bit addresses are used to access external memory. In the case of accessing other memory modules, the processor sends a 16 bit address and indicates the memory module by asserting the destination signal associated with the desired internal memory module. A 32 bit address can either be an external address, or a mapped address, depending upon processor control. If the address is designated to be an external address, it is sent to the external memory interface for processing. Otherwise, it is sent to the memory mapper. The memory mapper uses an associative search to determine if the address is internal or external. If it is internal the associated internal address is sent to the external memory interface.

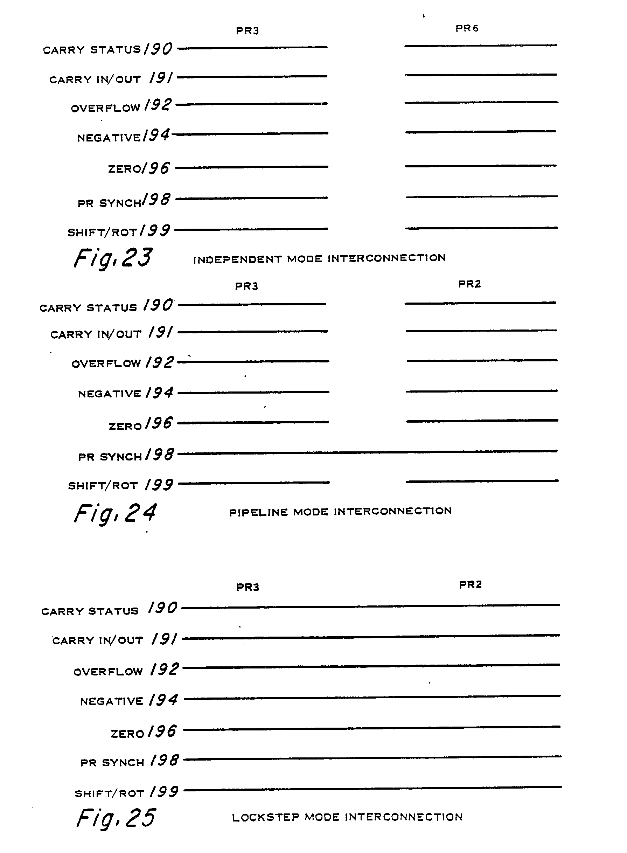

The status bus 52 (including the end around loop 54 of the status bus) interconnects the four processors PR0—PR3, and the external status ports 74 and 75. The status bus 52 includes only seven lines, namely a carry status line 190, a carry IN/OUT line 191 an overflow line 192, a negative line 194, a zero line 196, and a processor synchronization line 198, and shift rotate line 199. Thus, including the end around loop 54, the status bus is only 14 lines wide. Each processor includes a corresponding pair of status multiplexers 48 or 50, which are programmable switches. These switches serve to selectively and programmably connect the status output and input lines of each ALU 28 to the status bus lines, both of the status bus 52 and of the end around loop 54, in either direction. Figures 23—25 provide several examples of the status bus connections selected by the status multiplexers 48 and 50. When the processors are operating independently, as shown in Figure 23, there is no need for status line interconnections, and the status multiplexers 48 and 50 simply create open circuits in the status bus 52 and 54. When adjacent processors are operating in a pipeline configuration, where the data output of (e.g., PR3 is provided as an input to PR2, only the processor synchronization line 198 needs to be connected. Finally, when processors PR3 and PR2 are operating in a lockstep configuration, as part of a 32 bit or wider processor, the status outputs of processor PR2 are all provided as status inputs to processor PR3. The processor synchronization line is used in the lockstep mode to ensure that a new operation is not started before the current is completed. For example, all processors may not receive their memory access at the same time due to pending memory requests from other sources being unevenly distributed across the memory modules being accessed by lockstepped processors. The status of the programmable interconnects in the status multiplexer 48 and 50 is governed by control lines provided from the DLA 22. The status lines 190 through 196 are connected to status inputs and outputs from the ALU 28 and the flag register 46, the shift/rotate line 199 is connected to link-in and link-out bits of the barrel shifter 30, and the processor synchronization line 198 is connected to the DLA 22. The external status ports 74 and 75 also contain similar programmable interconnect circuitry.

The manner in which the above structural features cooperate to provide the reconfigurable multiprocessor capability of the present invention will now be discussed in further detail.

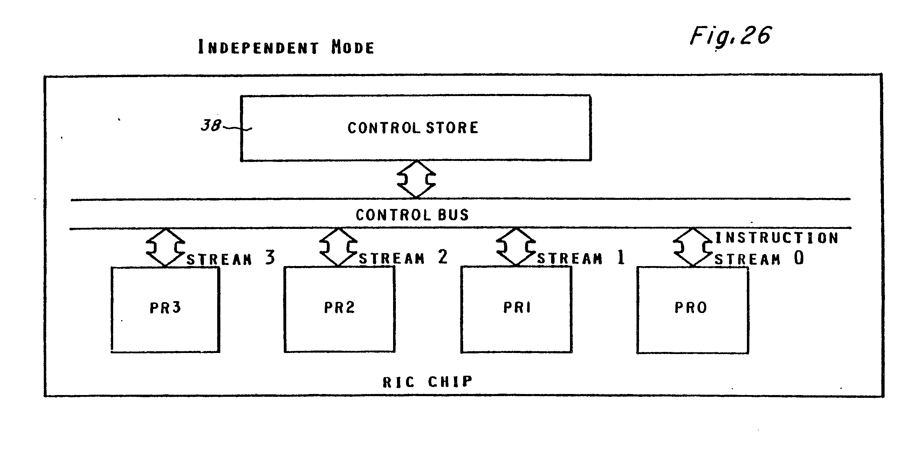

Figures 26, 27, and 28 illustrate the three principle modes of operation of the restructurable integrated circuit according to the present invention. Figure 26 shows generally the organization of the independent mode, where processors PR0—PR3 function as, in effect, four independent processors which happen to be located on a single chip. Four separate instruction streams are provided to the separate processor PR0—PR3, and the only interface required between the separate processors is that accessed by the control bus and data bus protocols.

The same configuration also supports array processing operations. In array processing, the interconnections of the processors are the same as for the independent mode; the difference is that, in array processing, each processor receives the same instruction stream. Of course, array processing may also be based on lockstepped subcombinations of processors (e.g., two 32-bit processors).

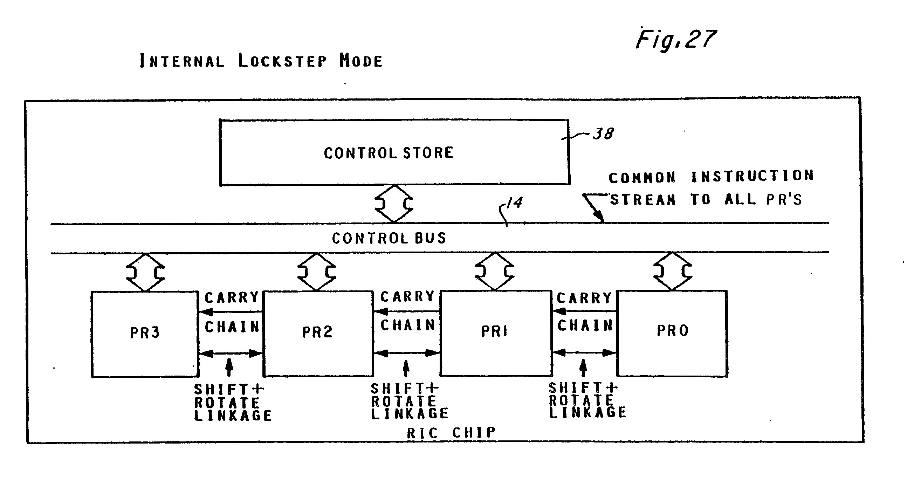

Figure 27 shows an example of the RIC operating in the internal lockstep mode. In this example, all four processors have been reconfigured to operate as a single 64-bit processor. In this configuration, the control bus 14 carries a single common instruction stream, which is received by all processors. The necessary synchronization carry and status bits are communicated over the status bus 52 and 54, as discussed above. In addition, shift and rotate linkage is provided, so any desired bit or rotate operation may be performed on a 64-bit word, via the data bus 56. (For this linkage, the data bus 56 is configured as discussed above for the pipeline mode). One-bit shifts and rotations are performed over shift/rotate line 199. Accurate programming for this mode of the RIC permits 64-bit access to the RAM memory 66 in a single clock cycle, since each processor reads or writes its 16-bit segment of the 64-bit word, and all processors do this in corresponding locations of the four RAM memory modules 60 simultaneously.

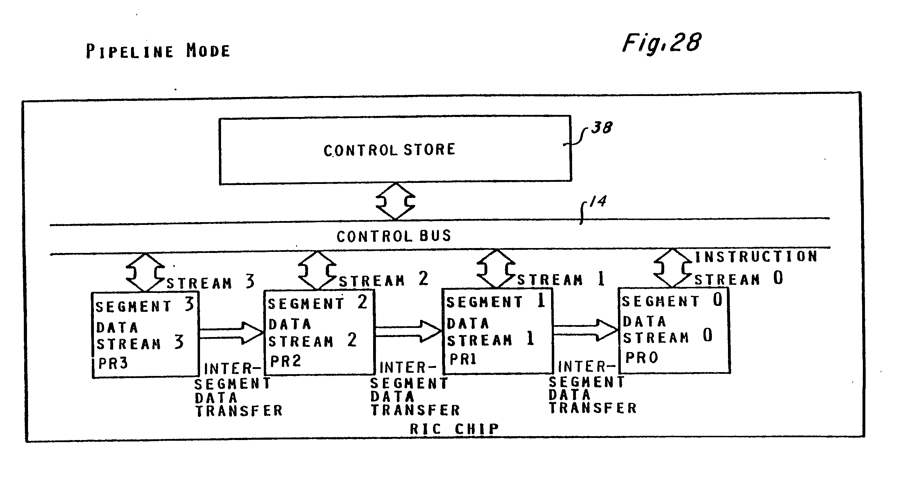

Figure 28 shows an example of the RIC configured to operate in pipeline mode. In this configuration, the four processors perform successive operations on what is originally a single data stream. That is, the total instruction set is divided up (by the programmer) into four operation sets which will each require approximately equal time, and the four processors then each perform only one respective portion of the instruction process on successive portions of the data stream. Thus, where a data stream must be operated on by an instruction set which is ammenable to subdivision in this manner the throughput is approximately quadrupled. Since the division of the instruction set into four instruction subsets is performed by the programmer, the instruction stream appears, at the chip level, merely as four separate and distinct instruction streams, one directed to each processing step in the pipeline. As discussed above, the BCUs 58 are configured to segment the data bus 56 and permit direct data transfer between successive stages in the pipeline (i.e., between adjacent processors). In addition, lockstep and pipeline configurations may be combined, so that the RIC operates as, e.g., two 32-bit processors connected to form a 2-stage pipeline. In this case, the transfer of data between subsequent pipelined stages must be multiplexed on the data bus 56. Thus, in this example, where processors PR3 and PR2 form the first stage of a 2-stage 32-bit-word pipeline, processor PR3 would transmit the most significant bits of the first-stage output, while pulling down destination line 168 which corresponds to processor PR1, and PR2 would subsequently output the least significant 16 bits of the output word over data lines 158 while pulling down the destination line 168 corresponding to processor PR0.

To accomplish reconfiguration, three main types of interrupts are used. The first type of interrupt requests the resources of other processors (i.e. interruptees) for establishing a lockstep mode of operation. In this mode, one processor controls the operation of the other processors in the ensemble, and will therefore be called the master processor of the lockstep ensemble. If this type of interrupt cannot be accepted by all processors for immediate processing (after the processors have performed context switches), the interrupt will lead to no further action, and will be reissued by the master processor later. In this case, the master processor whose interrupt was rejected will put its process in a buffer for future rescheduling, and start running the process which it has scheduled next. Also, it is the responsibility of the master processor to send an interrupt again at some later time. Thus, a lockstep interrupt can be accepted only if it can be processed immediately. This protocol minimizes interprocessor communication by avoiding the necessity of interprocessor interrupts which imply operations such as: "your processor is needed", "my processor is now available", "release my process", and "your processor is now released", etc. This reduces the numbers of bus cycles used for interrupts and reduces the complexity of process and interrupt scheduling. Simple buffering and deferral of rejected interrupts is less complicated than the alternatives discussed above.

The context switch for an interruptee in a lockstep process will involve less context than other types of interrupts. When a processor is involved in a lockstep process, its microsequencer 36 remains idle during the entire lockstep process. In effect, the master processor's microsequencer 36 takes the place of the function of the microsequencer 36 in the other processors. Thus, the other microsequencers' context can be left alone, since in this case the sequencers will be idle. Of course, this only matters if true microinterrupts are permitted, i.e. interrupts can occur within the execution of what would be macroinstructions in a conventional machine. In a preferred embodiment, microinterrupts are allowed, although their elimination would serve to reduce complexity. The motivation for allowing microinterrupts is two-fold. First, some applications, such as multichip implementations of large CPUs, will not have macroinstructions, in order to achieve maximum performance. Second, some macroinstructions can be very long, such as string manipulation.

The interrupt manager of a slave lockstepped processor keeps on monitoring the control bus 14 for interrupts directed to it. However, if any processor in a lockstep ensemble receives an interrupt with higher priority than that of the currently running process in the ensemble, the master processor, which monitors interrupts directed to the slave processors, performs the appropriate context switch in all processors of the block step ensemble. The master also notifies the source of the interrupt that its interrupt will be processed immediately, using the normal interrupt reply. The master processor also releases all processors in the ensemble which are not required to serve the interrupt. The master processor also puts the interrupted process in a buffer for rescheduling. The master resubmits the interrupted process to the other processors in the ensemble. After all processors in the ensemble are again available, the interrupted lockstep operation is resumed.

If a slave processor, while operating in a lockstep ensemble, receives an interrupt having a lower priority than the lockstep process, the slave processor buffers the lower-priority process for future scheduling. Thus, while the master processor must be able to identify interrupts directed to any other processor in the ensemble, the master processor's interrupt manager 12 is not required to perform any action whatever on slave-processor-interrupts which have a lower priority than the lockstep process. The interrupt manager 12 in the respective slave processors buffer lower priority interrupts.

The second type of interrupt requests specify some computation to be perfomred by the interruptee processor (i.e., this is the familiar "classical" interrupt). An interrupt of this type will be followed by an instruction stream specifying the process to be performed. An interrupt of this type will be processed according to its priority; when such an interrupt is scheduled for service, the appropriate processor performs the requisite context switch, in accordance with the first instruction following the interrupt.

The third type of interrupt initiates a pipeline process. The management of a pipeline interrupt is similar to that of a lockstep interrupt. When a master processor sends out a pipeline interrupt, all receiving processors signal whether they can participate in the pipeline process. If less than all receivers are available, the interrupt is withdrawn and is reissued later. Also analogously, the master processor in a pipeline process monitors interrupts directed to any processor in the ensemble, and processors any interrupt having a higher priority than the pipeline process. The slave processors buffer only lower priority interrupts. The principal difference between the control of pipelined interrupts and the control of lockstep interrupts is that the slave processors in pipeline interrupt process use their own respective microsequencers 36 to execute independent microinstruction streams. Therefore, the context contained in the microsequencers 36 of the respective slave processors must be saved.

In a shared resource environment, such as those discussed above, deadlock is an important hazard which must be avoided. For example, if processors PR1 and PR0 each wish to acquire the resources both of processor PR2 and of PR3 and if processor PR1 succeeds in getting control of processor PR2 while processor PR0 gets control of processor PR3, a deadlock would occur, if processors PR1 and PR0 were programmed simply to await availability of the respective missing processor PR2 or PR3. Deadlock is avoided in the present invention, by several expedients. First, each process running and each interrupt is assigned a unique priority, by the programmer. Conceptually, each process can be thought of as having a name, which is identical to its priority and the priority of the interrupt that initiates the process. Because all processes running in the system have distinct priorities, no deadlock can occur, since the interrupt with higher priority will preempt the destination processor. In the presently preferred embodiment, 256 priorities are allowed in the system, as indicated by the eight low-order lines of the address bus during an interrupt. Whenever an interrupt is accepted and buffered, the priority information is also buffered. When a buffered interrupt is scheduled for service, the interrupt control word, including the 8-bit priority information, is fetched to start the process.

Thus, all processes (i.e., streams of instructions) have a priority level (or name) between zero and 255, where 255 is the highest priority. Every process is initiated by an interrupt having the same priority as the process itself. The master processor of a multi-processor process interrupts all of the needed additional processors with the same level interrupt. In a lockstep process, the same microinstruction stream is executed by all processors. Each processor in the lockstep process is treated as if it were executing the exact same process as all other processors. (However, at times there are minor differences due to the relative position of a processor in a lockstep, e.g. the presence or absence of carry-in bits). The difference between lockstepped processors is that their position determines the hardware interconnection between processors, and the master processor processes the higher-priority interrupt for all processors in the ensemble. In a pipeline process, each processor is interrupted with the same interrupt, and initially each processor executes the same instruction stream to set up the pipeline process. Subsequently, each processor in the pipeline process can execute a different microinstruction stream. The processors diverge from the initial common microinstruction stream by using their respective position numbers to select the corresponding proper branch into the separate microinstruction stream for each processor. Even though each processor in a pipeline process may be executing separate microinstruction routines, all are considered to be executing the same process, for chip management purposes. The master processor in a pipeline ensemble processes higher priority interrupts for the whole ensemble, similar to the management of a lockstep process. A process requiring only one processor does not require the protocols necessary for management of multi-processor processes.

A constraint which arises from the above-discussed priority scheme is that processes cannot be shared without restrictions. The restriction is that a shared process cannot have more than one invocation at a time, within the same processor. This restriction applies formally to any process, but is of significance only for a shared routine, because multiple separate processes could launch a shared routine. This restriction avoids the complexities of storing multiple states for a single process, and avoids the mechanism which would be necessary to distinguish multiple invocations of the same process. The desirable features of sharing routines and allowing recursion are nearly all obtained in a straight forward manner: if a routine is to be shared or called recursively, each possible invocation of such a routine is assigned a unique priority level. This solution saves the control store space required to duplicate shared routines. Upon launching such a task, the priority level causes an access to a control word. In the control word is a field that points to the first address of the routine. A shared or recursive routine will have multiple priority levels that all point to the same starting address in the control store 38.

The provision of 256 priority levels is ample for most applications, and thus is included in the presently preferred embodiment. However, if more priority levels are desirable, it is of course a trivial task to allow for, e.g., 10-bit rather than 8-bit priority specification. Also, the provision of 256 priority levels means that there are only 256 active processes at one time. There can be an unlimited number of inactive processes.

Consider, for example, using a restructurable IC according to the present invention to emulate a 32-bit CPU. Processes in the restructurable IC would be assigned to tasks such as: instruction fetch, context switch, instruction emulation, one process per external interrupt level, self-test, reset, etc. In this case, 256 processes would seem adequate.

The major task of the interrupt manager 12 in each processor is to receive and generate signals according to the interrupt signal protocol. The interrupt manager 12 sends and receives interrupts, and also signals the scheduler 16 whenever a new interrupt has been received, and indicates the priority of the new interrupt relative to the priority of the process currently under execution. Both the scheduler 16 and the interrupt manager 12 must store the priority of the current task being executed. When a new interrupt pre-empts the process currently underway, the scheduler 16 must immediately ascertain whether the new process requires storing of the entire context, including the contents of sequencer 36, or whether only a partial context switch is needed. Information regarding the required context switch is encoded in the higher order address bits 84. Since only eight bits are required to specify priority, six bits may be used to encode additional information regarding an interrupt, such as the degree of context switch required. If the newly received interrupt is of lower priority, and is therefore buffered, a full context switch is necessarily required, when the buffered priority is eventually scheduled, because such a process is necessarily not a lockstep process. Only lockstep processes do not require a full context switch. The scheduler, in such a case, stores the proper context, buffers the current task, and signals the interrupt manager 12 that the processor is ready to start the new process.

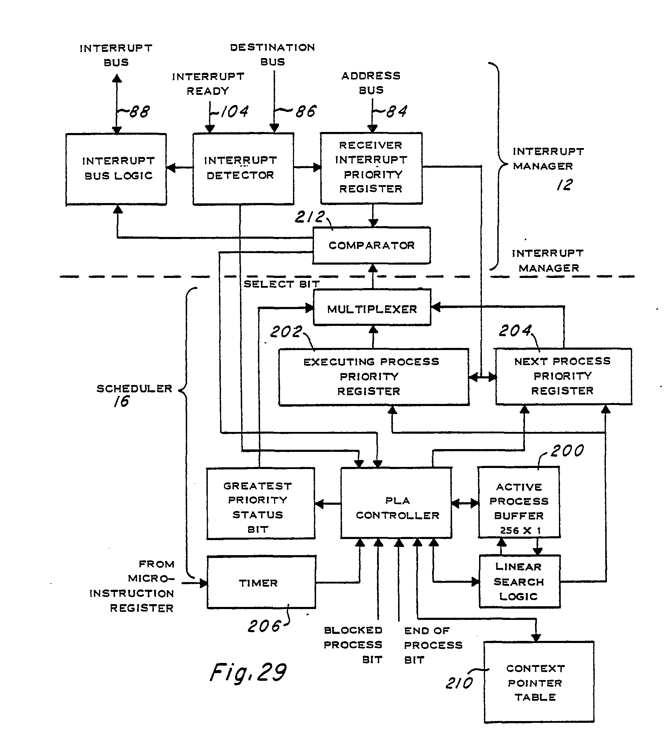

The structure and operation of the scheduler 16 will now be discussed in greater detail, with reference to Figure 29. The scheduler 16 must keep a list of active processes by priority. An active process is one that will begin execution when it is the highest priority that can be scheduled. To save hardware, the presently preferred embodiment maintains a 256 by 1-bit list, namely the active process buffer 200, to store active tasks. Whenever a particular processor has an active process named i (i.e., a process, awaiting execution, which has priority i), the ith position of this processor's active process buffer 200 in its scheduler 16 will contain a one. When a process in the active process buffer 200 is scheduled for execution, its location in buffer 200 (which is also its name and its priority) is used to access a table 210 which contains pointers to the context of each active process. Thus, the buffer 200 serves two main purposes: to keep track of active processes, and to rank active jobs by priority. The scheduler 16 thus has five main components: the buffer 200, the currently executing process priority register 202, the next active process priority register 204, a programmable timer 206, and a linear search logic 208 which linearly searches the buffer 200 to find the next highest priority test.

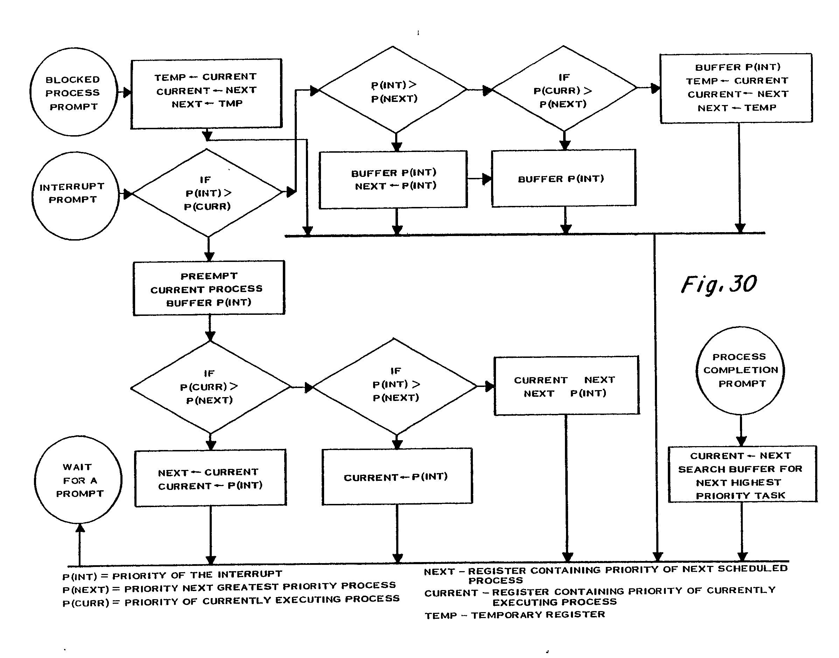

The operation of the scheduler 16 is diagrammed in the flowchart of Figure 30. The scheduler 16 may be called into action by one of three possible prompts: at the occurrence of an interrupt, the blocking of an active process, or the completion of a process. A "blocked" process is one which is prevented from continuing execution, because the required resources are not available. For example, a lockstepped process which does not receive all requested resources is blocked, as is a process which requires information (not received) from another process. When a process is blocked, its execution is first halted. Then all necessary context is stored. the scheduler 16 then buffers this blocked process by putting a 1 into the active process buffer 200 at a location equal to the priority of the blocked process. The priority of the blocked process is loaded into the next priority register 204 ("NEXT" in the flowchart), so that the blocked process will be idle at least until the next time the scheduler 16 is envoked.

A blocked process can program an interrupt, using timer 206, if desired. When such a process is blocked, it programs the timer with an instruction. When the timer 206 counts down to zero, a prompt to the scheduler 16 is issued. This prompt will cause the scheduler 16 to perform the normal scheduling cycle. If the blocked process which set the timer 206 has the highest priority, it will be scheduled. However, the timer 206 will be disabled if an interrupt is received via the control bus 14, if another process is blocked, or if a process is completed. The timer 206 is disabled in these cases because a normal scheduling cycle will be initiated, and therefore the timer function is not required. This scheduling discipline for blocked processes compromises between, on the one hand, allowing the blocked process to continually use chip resources to determine when the needed resources are ready, and on the other hand, forcing a high-priority process to be blocked longer than necessary. This compromise has low hardware cost and is expected to provide good scheduling behavior. However, allowing the next process to have a greater priority than the current process, while continuing to execute the current process, does complicate the operation of scheduler 16 somewhat.

When the scheduler 16 is invoked because of an interrupt, the priority of the interrupt received is compared, by comparator 212, with the greater of the current priority (from register 202) and the priority of the next process (from register 204). Preemption occurs only if the newly received interrupt has the highest priority of the three. If preemption is required, the newly received interrupt is initiated only after halting the current process and performing a context switch. The scheduler then places the greater of the next and current priorities into the next priority register 204. The current process is buffered by writing a 1 in the corresponding priority level in the active process buffer 200. If preemption is not required, the newly received interrupt is buffered in the active process buffer 200, and no further information about the buffered interrupt needs to be stored at the receiving processor. The greater of the next priority and the interrupt priority is placed in the next priority register 204. Thus, it is possible in some cases that the next priority register 204 may not contain valid information. This can occasionally occur because at times it is necessary to perform a linear search through the active process buffer 200 to find the next highest priority. If the contents of the next priority register 204 are not valid when required, the operation of the scheduler 16 is stopped until the valid data is found, which includes the case of finding no other active process. Finally, if a process completion prompt is received (which is communicated to the scheduler 16 through a process status bit), the next process will be started, and the search for the next highest priority process will begin.

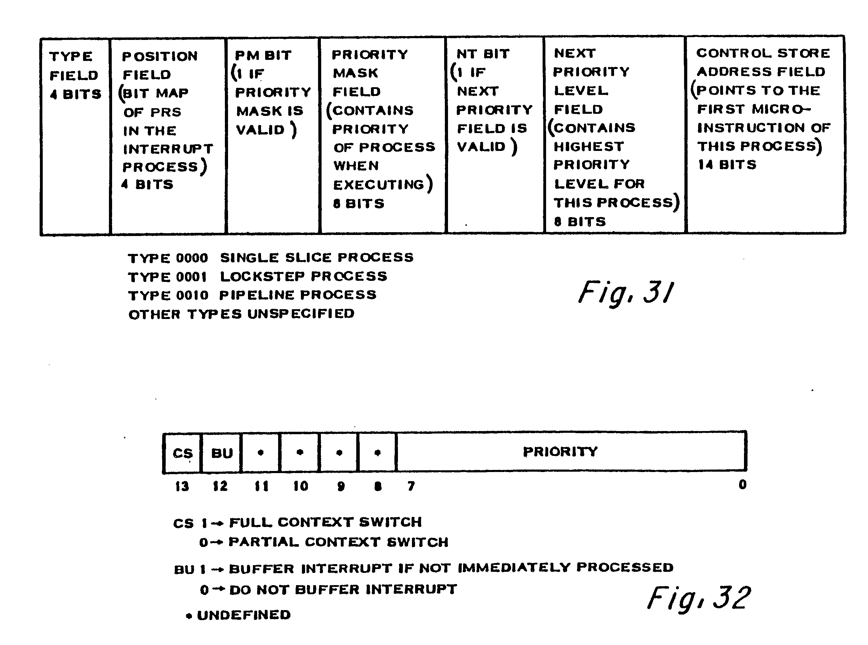

To clarify the operation of the interrupt system, the format of an interrupt control word (ICW) will now be described. Each process has an ICW associated with it. AN ICW is accessed by appending a predefined constant to the priority of a process. All ICWs are contained within a 256 word table in the control store 38. The constant appended for accessing an ICW is, in essence, a page frame number for 256-word pages. The ICW has been defined for three formats, shown in Figure 31. Other formats may of course be defined as needed. An ICW contains the necessary information, corresponding to an interrupt priority level, required to start or to restart a process.

The type field of an ICW is similar to an instruction opcode. Although the type field is 4 bits, only three types of ICWs have been defined: type 0 is for single-processor processes, type 1 is lockstep processes, and type 3 is for pipeline processes. The type field may also be used as an instruction field to the interrupt manager, to command the issuing of further interrupts.

The position field identifies the intended recipients of the interrupt. This field contains one bit for each processor and a one in each bit position is used to indicate that the corresponding processor should receive the interrupt.

The priority mask field is used to specify an executing priority that is different from the process name or priority. In other words, the process priority can be considered as a bidding priority (rather than an executing priority when the priority mask field is utilized. The PM bit is used to specify whether the priority mask is to be utilized or not. The priority mask is used to increase the probability that a process requiring multiple resources will run to completion. The priority mask is restructed to using a priority value which has not been assigned to any other process. Otherwise, it would be possible to reach deadlock when two processes contended for resources with the same priority.

The next priority field provides the possibility of assigning multiple priority levels to the same process. This field is valid only if the NT bit is a 1. This capability permits a run time determined priority to be assigned to a process. This facility would be useful when the urgency of a process changes in time. For example, a process may issue an interrupt with a given priority level, in anticipation of a needed service. If the interrupt does not cause immediate action, the initiator of the interrupt will try later. However, since the need for the interrupt service has (in this example) become more urgent due to the time delay, the initiator can issue the interrupt with the next highest priority. The next highest priority is contained in the next priority field. Another way to use this capability is to initiate multiple instances of the same process. This mode of operation provides parallelism if the position field differs from priority level to priority level. If the same position field is used, then recursive routine can be implemented.

Finally, the control store address field points to the address of the first microinstruction of the process microroutine which is being introduced by the current interrupt.

As noted above, only 8 lines of the 14 control store address lines 84 are used to encode the priority when an interrupt is sent. It is therefore useful to use one of the six remaining available bits to specify whether a full or partial context switch is to be undertaken. In addition, another of these bits may be used to specify whether the interrupt is to be buffered or not, if it cannot be processed immediately. Thus, Figure 32 shows the format of the control store address lines 84 as an interrupt is being sent.

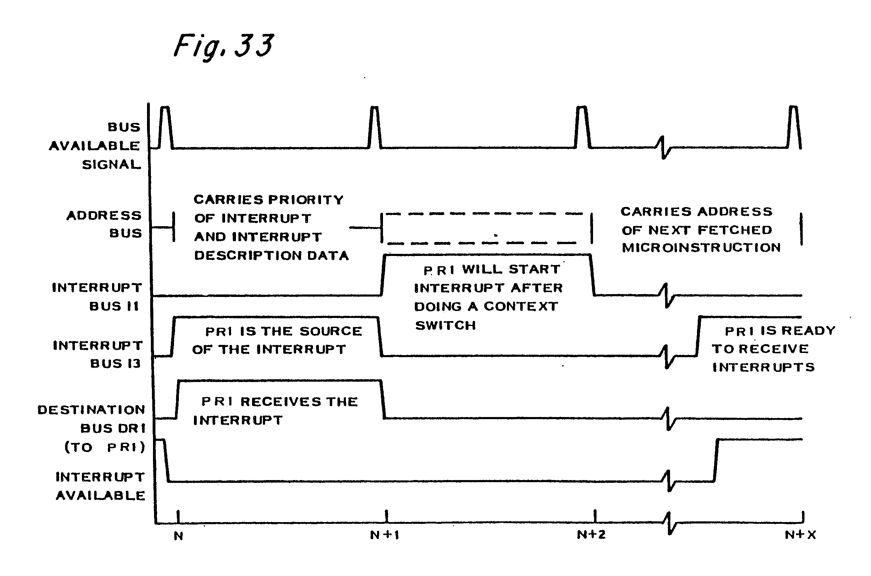

To further clarify the operation of the interrupt system, Figure 33 provides a timing diagram corresponding to a sample interrupt, where processor PR3 is interrupting processor PR1. At time n, processor PR3 gains control of the control bus 14, and indicates (on line I3) that it is the source of the interrupt, and (on line DR1) that processor PR1 is the destination of the interrupt. At this time too, processor PR3 pulls down the interrupt ready line 104, since no other interrupt should be transmitted over the control bus 14 until the current interrupt has been acknowledged. At the next clock interval, processor PR1 acknowledges the interrupt, by raising the appropriate line of interrupt bus I1, to indicate that processor PR1 will initiate the interrupt after performing a context switch. Processor PR3 then drives the address bus 84 with the address of the microinstruction which is to begin the process signaled by the interrupt, and, when processor PR1 completes its context switch, processor 1 then loads this address and raises (or ceases to pull down) interrupt bus I3 and interrupt ready line 104, to indicate that reception of interrupts is again possible.

The above indicates the organization of interrupt protocols, to provide for reconfigurability and for multi-processor capability. Other elements in the command structure which are required for reconfigurability include commands switch, when interpreted by the DLA 22 and by the DLA decoder 26, specify reconfiguration of the status bus multiplexers 48 and 50, or which specify operations of the bidirectional switches 178, 180, and 182 in one of the BCUs 58.

The preferred embodiment of the restructurable IC according to the present invention is contained in 84-pin package (An alternative 112-pin package, permitting 64-pins for data and addresses, is less economical).

For some configurations, the full 84-pin package is not required, and cheaper packages might therefore be used for medium-quantity production of RICs designed for such applications.

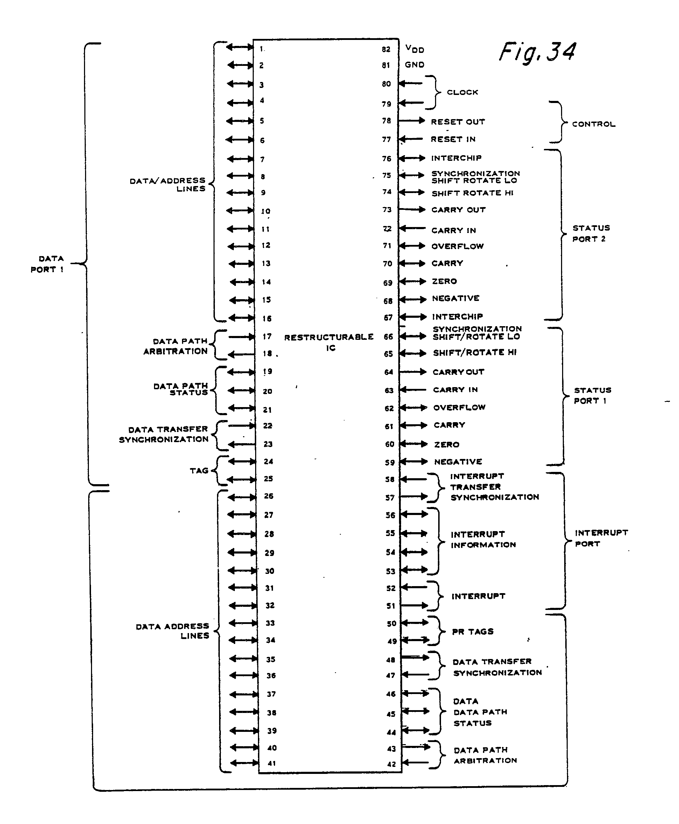

The preferred package for the RIC according to the present invention is an 84-pin plastic leaded chip-carrier, as described, e.g., in *Electronics Magazine*, June 30, 1981, at page 39—40. However, pin assignments are shown in Figure 34, for convenience, as if the RIC were contained in a very large DIP package.

The preferred embodiment of the RIC has two 16-bit data/address ports. Each port has 16 bidirectional lines for carrying data and addresses. The data/address pins are numbered 1 through 16 for port 1, and 26 through 41 for port 2. Only the pins associated with data port 1 will be discussed, since the corresponding pins of data port 2 are functionally equivalent. Data ports 1 and 2 correspond to external data ports F2 and F3 shown in Figures 1 and 2. In addition to the simple pin connections, the external data ports 72 and 73 include handshake signals (pins 17 and 18), for arbitrating control of a shared external bus between one or more RICs, external memory, I/O devices and addressed devices. Each port includes additional pins (22 and 23) to synchronize the sending and receiving of data and addresses on the bus. Each port also has a bidirectional set of three lines (pins 19—21) to indicate bus status, and a bidirectional pair of processor tag identifiers (24 and 25). Data ports 1 and 2 are independent. However, these ports can be operated as a single larger port, by internally performing the same operation to both ports concurrently, and by externally treating the two ports as one port. There are two main functions of the external data port. One function is to serve as external data ports 72 and 73. One major function of the data port is to serve as an interface between the internal data bus 56 and the external data port pins. Effectively, what this means is that it has a capability of receiving an internal command to send out data and addresses, and it can provide that function and convert that into the appropriate signals to the external pins. Secondly, it can receive information from external pins and then do the proper conversion and sending of the signals appropriately to the internal RAM bus 56. The second major function is a block transfer mode. This differs slightly from the other above operations in that instead of sending a command to send out one address and data word for example, the command is more general in that it can send out multiple addresses and data words are under internal control and instruction.

As is conventional, the most significant chunk of data or address will be sent on the first cycle, followed by successively less significantly chunks on successive cycles. All chunks of an address or data are sent over the same port on which the first (i.e., most significant) chunk was sent.

These two data ports are common to all processors on a chip. Any processor, or any internal configuration involving two or more processors, can use either data port. A port is selected through the memory mapper 34 within a processor.

In addition to the functions related to external communication protocols, which will be discussed below, the external data ports 72 and 73 also contain circuitry, exactly as discussed above regarding the processor implementation of the data bus protocols, so that external processors may also access on-chip memory.

Data path arbitration: The facility for arbitrating a shared data path has been provided. Each RIC can function with external arbitration circuitry, master-slave, or with a round robin arbitration scheme. The arbitration mode is designated upon the start-up of a RIC. The arbitration signals are called Data Path Available (DPAV) and Data Path Granted. The signal labels for port 1 are DPAV1 and DPGR1 (pins 17 and 18), and DPAV2 (pins 42 and 43) for port 2. Henceforth, these signal labels will be referenced without a numerical suffix to discriminate between two identical ports. When the external arbitration circuitry mode is used, a RIC starts the process to gain control of the bus by raising the DPAV output signal which is connected to the external circuitry. When the arbitration determines that the data path is available for the requestor, the requestor's DPGR signal is raised. For master-slave mode, the master RIC always controls the bus. If a slave RIC wants the bus, it sends a request to master via the DPAV signal. The master signals that the bus can be used by the slave by raising the DPGR signal. The other mode of arbitration is a round robin scheme. In this scheme, a one is circulated among data path users. When a RIC has either completed a data path operation or has none pending, it raises its DPAV signal which is connected to an adjacent RIC's DPGR signal. When a RIC's DPGR signal goes to a one, if a data path operation is pending, it will gain control of the data path. Otherwise the RIC will raise its DPGR signal. If a RIC which has given up the bus determines that no other resource wants to use the bus, this RIC will trap the circulating 1. Then to maintain synchronization (if any), this RIC will recirculate the 1 by raising its DPGR.

Data path status: Each port has three pins (19—21, and 44—46) to indicate the status of the data path. Only the user which has gain control of the data path can output on the bidirectional pins for data path status. The assignment of the status pins is listed in Table 1 for port 1. (Port 2 is identical except that pins 44—46 replace pins 19—21 in Figure 34).

TABLE 1
Data path pin assignment

| Pins | | | |
|---|---|---|---|
| 19 | 20 | 21 | Function |
| 0 | 0 | 0 | Write to adjacent RIC |
| 0 | 0 | 1 | Read from adjacent RIC |
| 0 | 1 | 0 | Write to destination address |
| 0 | 1 | 1 | Read from destination address |
| 1 | 0 | 0 | Write to memory |
| 1 | 0 | 1 | Read from memory |
| 1 | 1 | 0 | Write from I/O |
| 1 | 1 | 1 | Read from I/O |

The data path status indicates the type of data path operation. There are four possible destinations for the data path operation: a designated RIC, a destination whose address is specified by the first portion of the data transfer, the system memory, or the system I/O unit. A read or write operation can be performed with any of these four destinations. The actual number of 16-bit address units and 16-bit data units transferred to any destination is determined by programmation of the RIC and the destination hardware. Direct communication is provided to only one adjacent RIC. The destination address mode is a general method to specify a source or sources for a data path operation. The first portion of the data transfer specifies an address which determines one or more destinations. The number of 16-bit units which comprise a destination address is user specified. In this mode, an address is sent to all receivers on the data path. The receivers determine whether the address is one of their own. All addressed receivers continue to participate in the remainder of the data path operation. The format of the address length and data length for the memory and I/O destination operations are also user specified.

PR tag pins: These pins are bidirectional pins. As output pins they are used to denote the source processor of a data path operation, i.e., a single processor which has initiated a data path operation or the processor which is the master processor of an internal lockstep. The data port can thus be used with an organization in which the data path is not controlled by a sender during an entire data path operation. For example, a RIC could relinquish the data path after sending an address to memory for a read and wait for the memory to gain control of the data path and send back the data. The motivation for temporarily relinquishing the data path is to allow another data path transaction to occur in the meantime. Under this relinquishing discipline, the PR tag information is essential in a READ operation, since the data retrieved from the memory may return in a sequence which is different from the sequence of READ requests (this will happen, for example, in a shared interleaved memory). The (external) memory controller buffers these pins to tag the data appropriately when it is returned to the RIC. Internally, the external data port 72, or 73 decodes this information onto one of the destination lines 168, to map the received data to the proper memory location. These tap pins also indicate a destination processor for RIC to RIC communication.

Data transfer synchronization: These two pins are required to ensure that data is transferred correctly between a source and destination on the data path. The pins are Information Available (IA) and Information Received (IR). The protocol for transferring information is as follows: Upon gaining control of the data path, the source immediately pulls the IA signal low. As the source places information on the data/address pins, the IA signal is raised to a one. The raising of the IA signal implies to all receivers that information is being transferred on the data path. The IR signal is normally low. When a receiver has buffered the information from the data path, it raises its IR signal. The IR signal is wireANDed. Thus, in the case where there are multiple receivers, the IR signal will remain low until all receivers have buffered the information.

In summary, a data path has been specified to build arbitrary data path networks with the use of the flexible arbitration process. The destination of an information transfer is general because of the capacity to address destinations. The information format is general because it is specified through programmation of the RIC's and configuration of the memory and I/O systems. Finally, the transfer of information can be point to point or multidrop.

The interrupt port (pins 51—58) serves two purposes. One purpose is to receive and process external interrupts as conventional microcomputers and microprocessors do. The interrupt concept has been generalized to include this conventional purpose along with the capability to send interrupts to other receivers. This generalization provides interchip communication. The purpose of interchip communication is to coordinate RICs to a task, and to transfer information. The interchip communication system is used to transmit the command part of an interchip communique. The data part of an information transfer is communicated between memories. For example, a disc read operation is initiated by using the interrupt port of a RIC to send commands to a disc controller. The data transfer is accomplished on a separate data path between the disc system and the memory system.

Interrupt bus arbitration: The interrupt port of the RIC has eight pins 51—58. Pins 57—58 are for arbitration of shared resources used during the sending of an interrupt. Three modes of arbitration are supported. One mode supports a common interrupt bus which is arbitrated in a round robin scheme. In this scheme a one is circulated among the chips sharing the interrupt resources as described above. The Interrupt Available (IA) output (pin 58) of one chip is connected to the Interrupt Granted (IG) input (pin 57) of the adjacent chip. When the IG goes to a one at a chip, that chip can issue an interrupt. If that chip does not have an interrupt to send, it raises its IA signal. The second mode is the master slave mode described in the data port arbitration discussion. The master RIC normally has control of the bus. If a slave RIC requests access by raising the masters IG input signal, the master grants control of the bus at its option to the slave, by raising the master's IG signal. Another arbitration mode is to connect the Interrupt Available and Interrupt Granted signals of each chip to external arbitration hardware. When a RIC has an interrupt to send it raises the IA signal. The external hardware raises the IG signal when the interrupt port is available for the requestor's use. The motivation for providing three schemes arbitration is to provide generality of application. The round robin arbitration scheme provides an economical method of connecting a small number of RICs for interchip communication. The master-slave scheme allows the use of a common method for coordinating multiple intelligent devices. The capability to attach the RICs to an external interrupt manager makes it possible to build arbitrary networks for interchip communication.

Interrupt information: Four pins (53—56) of the port are dedicated to external interrupt information. The external interrupt information protocol has minimal specification with maximal user definition. Also, the information protocol is self describing with respect to discriminating between addresses and data. Also, the protocol describes the length of the message. These self describing features are described below. The information protocol specifies that the first part of any communique be the address which identifies the receiver(s) of the interrupt. The length of the address is designated by the user. When an interrupt is sent, all chips on a common interrupt

**0 071 727**

bus receive the address and store it. As will be defined below, the interrupt status signals indicate whether the information lines carry address or data. The receiver buffers the address portion as long as the status indicates address bits are being sent. After the destination address has been sent, each receiver uses the address to access a bit in the chip's RAM Memory 66. If N address bits are being sent, the high order N-3 are used to address a byte within a table in internal memory. This byte is sent to the RIC's external interrupt manager 76. The lower order three address bits then select a bit within this byte. If this selected bit is a one, then this chip is a destination for the interrupt. This RIC will continue to buffer the remaining information associated with the interrupt if any is sent. This address lookup mechanism is optional. In simple interrupt schemes, any interrupt received could be for any receiver.

The remaining two pins (51 and 52) of the communication port are used to indicate the status of the interrupt bus. The assignment of the pins is shown in Table 2:

TABLE 2

Assignment for communication status pins

| IS1 (pin 51) | IS2 (pin 52) | |
|---|---|---|
| 1 | 1 | Receiver ready |
| 1 | 0 | Sending data |
| 0 | 1 | Sending address |
| 0 | 0 | Information transfer complete |

The two interrupt status lines are used for two purposes. One purpose is to provide the asynchronous hand shake signals between the source and destination(s). The other purpose is to differentiate between address and data information transfers. The interrupts signals are in the 11 (i.e., IS1=1 and IS2=1) state before the interrupt information information transfer begins. Let the first nibble be an address. As the first nibble is sent, the interrupt status is 01. All IS1 signals are wireANDed together. Also, all IS2 signals ure wireANDed together. After a time delay, the source of the interrupt allows the IS1 signal to float. Each receiver pulls the IS1 signal to a zero as the information is loaded into the chip. After a chip has processed the received information, this chip allows the IS1 signal to float. After all receivers have processed the information, the IS1 signal will become a one. Then the status is 11. The sender then learns that the next nibble, if any, can be sent. The type of the next data is determined by the status lines. The status 01 corresponds to address information, and the status 10 corresponds to data information. If data information is sent, the sender uses the same protocol which is used for address information transfers. The only difference is that after the information is sent, the sender floats both the IS1 and IS2 signals. After the last nibble is sent, the sender puts the status 00 out to signify the end of the interrupt information block. After a delay, the sender floats the status signals. This informs the receivers that the interrupt is over. If external arbitration is used, the end of the interrupt also means that the next interrupt can be started. If round robin arbitration is used, the sender raises the Interrupt Available signal to begin the selection of the next interrupt sender. If master-slave operation is used and the sender is a slave, the master regains control of the interrupt resource. If the master is the sender, this informs the slave that the interrupt resource can be bid for.

The communication process begins by an MPS sending an interrupt to the chip's external interrupt manager 76. As described above, a priority byte and four bits of runtime information are sent to the receiver of an internal interrupt. When the interrupt manager 76 receives an internal interrupt, the priority byte points to a table entry. The table is contained in the chip's RAM 66. The table entry points to a message block. The runtime information implies the number of bytes in the message block. This allows 15 bytes to be sent out. If the runtime information is a decimal zero, the second byte in the message block contains the number of bytes in the message. If the second byte is a decimal zero (along with the runtime information), the next two bytes contain the number of bytes in the message block, etc.

After the chip's external interrupt manage 76 has received an interrupt for external sending, the interrupt manager 76 begins the interrupt sending process by gaining access to the external interrupt bus. If the arbitration scheme is round robin, or if the arbitration scheme is a master-slave and the sender RIC is a slave, the sender waits until the Interrupt Granted signal goes to a one. The master can send interrupts whenever it controls the interrupt resource. If the external arbitration scheme is used, the sender raises the Interrupt Available signal. The sender then waits until the Interrupt Granted signal goes to a one. The hardware control of the Interrupt Granted and Interrupt Available signals is determined by two status bits which are initialized at startup. If these bits are 11, the round robin arbitration is used, and the external arbitration scheme is used if these bits is a 00. The master slave mode is indicated by 10.

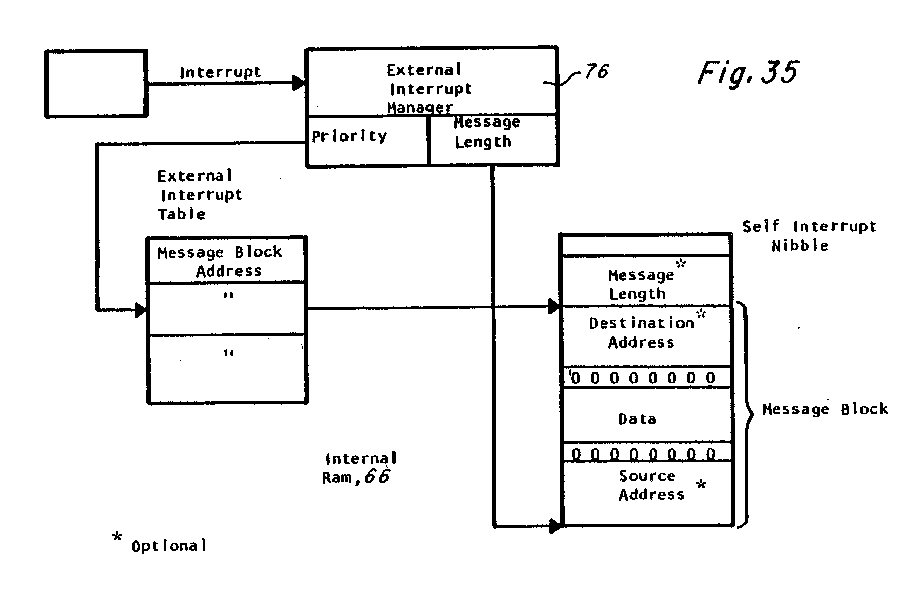

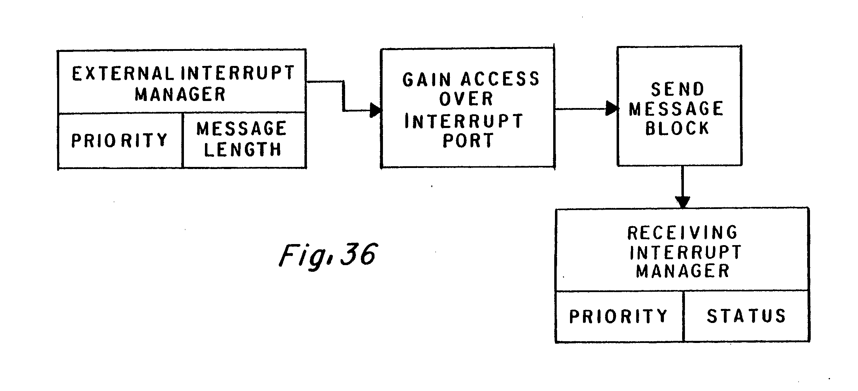

After gaining control over the external interrupt bus, the external interrupt manager sends the destination address. The interrupt manager 76 fetches data from the chip's RAM 66 and sends the information, a nibble at a time, on the interrupt port's information lines 53—56. The beginning of the message block is implied by the priority byte which the source processor sent to the external interrupt manager 76 to initiate the sending operation of the external interrupt manager 76. The priority byte points to an entry in the External Interrupt Table which contains both a byte which indicates whether the interrupt is to be sent both externally and internally, and the starting address of the message block. The first byte in the table is used to indicate a self interrupt, that is, an interrupt which is concurrently sent externally and internally. This type of interrupt is needed for interrupting external locksteps, as will be discussed further below. The leftmost nibble of this byte is all ones. The right nibble is used to indicate which internal processors are to be interrupted. The most significant bit of the nibble corresponds to PR3, the next most significant bit corresponds to PR2, etc. If a one is contained in any bit of the right nibble, the corresponding processor will receive the self interrupt. The end of the destination address is marked with a byte of zeroes. When the external interrupt manager 76 detects the byte of zeroes, the data portion of the interrupt message is sent if any exists. The end of the data portion is again marked by a byte of zeroes. Then the interrupt manager 76 sends the source of the address if any exists. The internal interrupt data structure is illustrated in Figure 35. The interrupt manager sends nibbles until the message block has been sent as determined by the length of the message block communicated to the external interrupt manager. After sending the message block and before processing any other interrupt, whether external or internal, the external interrupt manager 76 writes the status of the interrupt in a table and sends an interrupt to the processor which initiated the interrupt. Also, if the sending of the interrupt message block is terminated abnormally, this status is written into the same table and the originating processor is interrupted. This interrupt sending process is illustrated in Figure 36.

As described above, all RICs on a common interrupt bus receive the destination address and buffer it in their respective external interrupt manager 76. After the address has been received, each external manager 76 accesses a bit to determine if its respective chip is a destination of the interrupt. If an RIC is an interrupt destination, the external interrupt manager 76 buffers the remainder of the message within the chip's internal RAM. At the end of the data portion of the message block, the interrupt manager writes a byte of zeroes to signify the end of the data portion. The interrupt manager also buffers the source address of the interrupt if one is sent. After the message block has been sent, the destination RIC's external interrupt manager 76 uses the destination address to access the External Interrupt Map Table in internal RAM 66 to determine which processors on the RIC are to receive the interrupt and what priority the interrupt has internally. The priority of the internal interrupt is used to designate the location in the External Interrupt Message Table in which to write the starting location of the message block and the length of the message. Then the external interrupt manager sends an interrupt to the processors on the chip. They use the information in the External Interrupt Message Table to access the message block and process it.

The memory management of the RAM areas used by the external interrupt manager is performed by the processor which sends and receives the interrupts. When a processor sends an external interrupt, it passes a pointer to the message block. After the external interrupt manager 76 sends the interrupt, the sending processor is informed of the status of the sent interrupt. If the interrupt has been sent successfully, the processor can reclaim the message block memory area. The external interrupt manager 76 lacks the power of a processor PR0—PR3 to perform its own memory management. Thus, the external interrupt manager 76 requires memory management for the area in which it writes a message block received externally. The external interrupt manager has two memory pointers for storing message blocks: Current Message Block pointer (CMB) and the Next Message Block pointer (NMB). If CMB is valid, the external interrupt manager 76 will use this pointer as the beginning of the message block and will increment an address pointer after each byte of the received message block is written. After the interrupt message block has been received, the destination processors are informed of the interrupt. The external interrupt manager moves the NMB into the CMB immediately and marks the NMB as invalid. The processors which have received the interrupt immediately start a high priority process which calculates a new message block area. The starting address of this new message block is written into the external memory manager's NMB register. If the external memory manager reaches the state in which neither the CMB or NMB pointers are valid, the transmission of the message block will be halted until a valid pointer exists by signalling "not ready" to the sender of the interrupt.

The external interrupt manager 76 has a maximum block parameter which is initialized at startup. If a message block is sent which is greater than the maximum length, the external interrupt manager signals "not ready to receive" to the interrupt sender. Also, the external interrupt manager determines the source processors and sends them an interrupt which implies message block overflow. The processors then perform the action that has been programmed in. For example, the processors can do nothing which will abort the interrupt after the sender exceeds a timeout. Another possibility is to send the external interrupt manager 76 another message block pointer. The external interrupt manager 76 is informed by internal interrupt that it must continue receiving the message block starting at the new memory pointer. This latter procedure is used where the message block length is variable and the maximum block length is set to be greater than or equal to the majority of the message blocks.

The purpose of this interrupt interface is to provide a spectrum of user definable interrupt mechanisms. The simplest interrupt scheme is similar to the interrupt mechanism used in conventional microprocessors. The flexibility to expand beyond this simpler scheme is achieved through internal programmation.

There are two status ports, status port 1 (pins 59—67) and status port 2 (pins 68—76). The status ports' signals are identical. Only status port 1 will be discussed. One of status port's main functions is to provide the signals to lockstep two processors on different RICs. Status port 1 can be used to lockstep PR0 or PR1, or a lockstep of PR0 and PR1, to external processors. Status port 2 can be used to externally lockstep PR2 or PR3 or internal locksteps in which PR2 or PR3 is the most significant master processor in the lockstep. There are four types of pin functions in each status port: ALU result status, carry linkage, shift/rotate linkage, and interchip synchronization. Status port 1 (pins 59—67) connects to the internal status bus 52 and 54 through External Status Port 75 (seen in Fig. 1). Similarly, status port 2 connects through External Status Port 74 (seen in Figs. 1 and 2).

ALU Result Status: There are four lines (59—62) for indicating the ALU result status. There is the Negative result status, N; the Zero result status, Z; the Carry result status, C; and the overflow result status V. These four signals are each wireANDed to an external bus connected to all status ports which are externally lockstepped. These signals are encoded to indicate up to one of 16 ALU result statuses. The operation of these lines is closely analogous to the internal generation of ALU result status and the connection of ALUs (over internal status bus 52 and 54) for internal lockstep configurations as discussed above.

Carry Linkage: The carry linkage contains a carry in signal (pin 63) and a carry out signal (pin 64). The carry out signal of one RIC is connected to the carry in signal of the next most significant RIC. If one's complement arithmetic is used, the carry out of the most significant processor is connected to the carry in of the least significant processor.

Shift/Rotate Linkage: The shift/rotate linkage is used to perform shift operations between externally lockstepped processors. The shift/rotate hi signal (pin 65) of a RIC is connected to the next most significant RICs shift/rotate lo signal (pin 66). The shift/rotate hi signal of the most significant RIC is connected to the shift/rotate lo signal of the least significant RIC to provide the rotate linkage.

Interchip Synchronization: the purpose of the interchip synchronization (pin 76) is to ensure that externally lockstepped processors are executing the same instruction in phase. Processors in an external lockstep can get out of lockstep without synchronization, because other processors on one of the same RICs may be operating independently of the externally lockstepped processors. Thus, the time to fetch a microinstruction may vary among the RICs containing the lockstepped processors. The interchip synchronization pin serves as a flag to indicate that each processor has finished the previous microinstruction and has fetched the next microinstruction and is ready to execute it. The interchip synchronization pins are wireANDed together. When all externally lockstepped processors are ready to execute the next microinstruction, the interchip synchronization line will be high. If one or more PRs are not ready, the line will be pulled low. When the synchronization line is high, execution begins on the next clock cycle. (All RICs with PRs in a common external lockstep must use the same system clock). Shortly after execution begins, the interchip synchronization line is pulled low until all PRs are ready to execute the next microinstruction. When PRs are externally lockstepped, they must be uninterruptable during a microinstruction execution. This interrupt restriction is needed to ensure that externally lockstepped processors remain synchronized after beginning a microinstruction execution. The benefit of this restriction is that no other synchronization is needed for the pins of the status port. There is one other issue related to the synchronization of externally lockstepped processors. The effect of interrupts must be considered, since an interrupt directed at a processor in an external lockstep can disrupt the synchronization of the processors. In order to maintain external lockstep synchronization without added pins or added overhead, interrupts to an external lockstep are restricted to being directed at all the MPSs in the external lockstep. This is not too severe a restriction, since it is possible to interrupt a subset of an internal lockstep. Requiring interrupts to be sent to the entire external lockstep eliminates the need for processors in the external lockstep to communicate the name of the interrupt they are about to begin to process. An interrupt sent to an entire external lockstep will be executed properly because all RICs which contain the external lockstep to be interrupted receive the same interrupt at the same time. The external interrupt manager of an RIC processes interrupts in the order in which they are received. Thus all processors in an external lockstep will receive interrupts in the same order. The self interrupt feature of a RIC is needed in the case where an ' interrupt to an external lockstep is generated within a RIC which contains a processor in the external lockstep to be interrupted. As mentioned above, a self interrupt is treated by the sender of the interrupt as it is also receiving the interrupt.

As discussed above, a processor in an external lockstep cannot be interrupted within a microinstruction. At the end of a microinstruction a processor which has been interrupted will issue a code on the four ALU result status lines. (e.g., 0111). This code implies that an interrupt of the external lockstep has been received by at least one of the processors. This will halt the external lockstep execution. Each processor will discontinue pulling down the interchip MPS synchronization line when a context switch has been performed. If another interrupt with higher priority than the current interrupt is sent to the external lockstep during the time in which the current interrupt is being switched to, the next interrupt is ignored until all the processors have switched to the current interrupt.

There is another main function of the status ports. The external ALU status pins N, Z, C, V, have a value as determined through taking the actual internal ALU status pins as input to the control DLA 22 which then generates the value sent to external pins. The above described capability thus allows the actual external signals to be used for generating real time signals. For example, in the case of CRT controller implemented with a RIC, the N signal could be internally controlled to generate a horizontal sync signal. Also, the interchip synchronization signal can be used as a direct interrupt into the internal control system (i.e., the DLA 22 etc.). For example, the interchip synchronization signal could be internally interpreted as an external clock which causes a predetermined operation to occur during each clock cycle.

All processes of an external lockstep are initiated by interrupts. A reset to a RIC causes the master processor in an external lockstep to generate a self interrupt to start the external lockstep. At the completion of a process, the master processor issues a self interrupt to initiate the respective processes with the highest priorities.

There are two chip control lines, the Reset In (RI) (pin 77) and Reset Out (RO) (pin 78). The RI and RO signals from all RICs are separately connected. The RI signal is active high. When the RI signal is raised to a 1, the RICs begin to initialize themselves for operation. The RO signals are effectively wireANDed together. When a RIC has completed the initialization operation, the RO signal which had been pulled low is allowed to float. When all RICs have completed initialization, the RO signal will be high indicating that the system has finished initialization.

When a chip is initialized, processor PR3 is immediately initiates a process having the highest priority (255), in which processor PR3 is the master. Processor PR3 then loads a fixed address in location 0 of the on-chip RAM 66, and processor PR3 then interrupts the other processors to begin their required processes.

In the presently preferred embodiment, wherein the RIC is embodied in one micrometer geometry NMOS with CMOS used for high-power portions, two power pins 81 and 82 are used: at three volts and at ground.

In addition, the presently preferred embodiment places a clock generator on the RIC, requiring only a crystal to be placed across the two clock inputs (pins 79 and 80). Alternatively, an external clock can be connected to these pins, as would be desirable, e.g., where a system using multiple RICs was to be embodied.

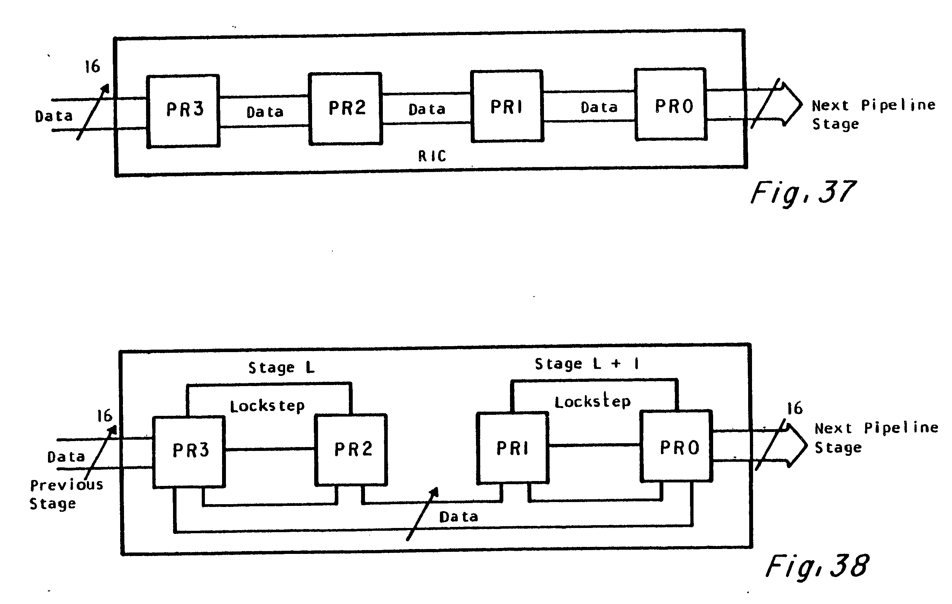

Figures 37 through 41 illustrate some specific configurations attained using one or more RIC chips. Figure 37 illustrates a 16-bit pipeline RIC configuration. Note that the pipeline process need not be limited to only four stages of processing, but, by linking together additional RICs, may include as many stages as desired.

Figure 38 illustrates a 32-bit pipeline. Note that processors PR3 and PR2 are lockstepped together, as are processors PR1 and PR0. Note also that, again, although only two stages of the pipeline are illustrated, the pipeline may include any desired number of stages, simply by linking together a sufficient number of RIC chips.

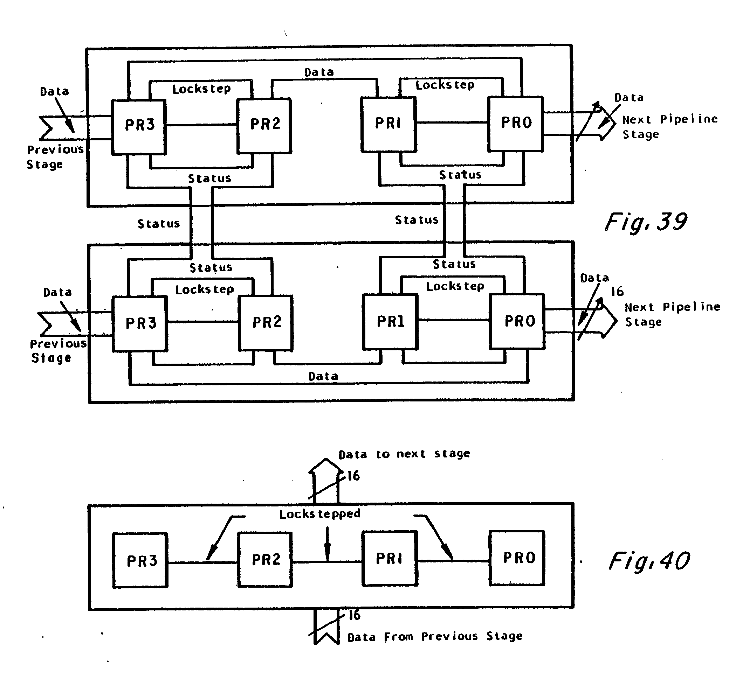

Figure 39 illustrates a 64-bit external lockstep pipeline configuration. Note that processors PR3 and PR2 of RIC A, and processors PR3 and PR2 of RIC B are all connected in lock step, as are all processors PR1 and PR0. In Figure 39, the 32-bit outputs from both RICs are shown as multiplexed over respective single 16-bit data ports, which since one of the data ports, in a pipeline configuration, is necessarily used to receive data supplied from the previous stage. Even wider pipelines may be created analogously, by extending the width of the external lock step configuration which units processors PR3 and PR2 on different RIC chips. Thus, the width of the pipeline word may be extended in 32-bit increments. A 32-bit increment is added by connecting all pins of the status port for a particular stage except the carry in/out and shift/rotate high/low signals. These signals (except the carry and shift/rotate signals) are properly functioning when they are, wireANDed together. The carry out signal is connected to the next most significant carry in pin. The shift/rotate high pin is connected to the next most significant shift/rotate low pin. (The most significant shift/rotate high is connected to the least significant shift/rotate low pin).

Figure 40 shows a 64-bit wide stage of a pipeline. This stage is formed by internally lockstepping all four processors on a restructurable IC. In Figure 40, separate 16-bit input and output ports are shown, so that multiplexing of the data transfer over four phases is required. It is also possible to coordinate the two data ports of each RIC, so that a 32-bit parallel port is formed. This would allow the 64-bit pipeline stage configuration of Figure 40 to perform a data transfer in two clock cycles rather than four. However, this would require a separate isolation switches to permit 32-bit transfers and parallel between different pairs of stages of a multi-stage pipeline. Thus, use of a multiplexed 16-bit port is much simpler, and is generally preferred.

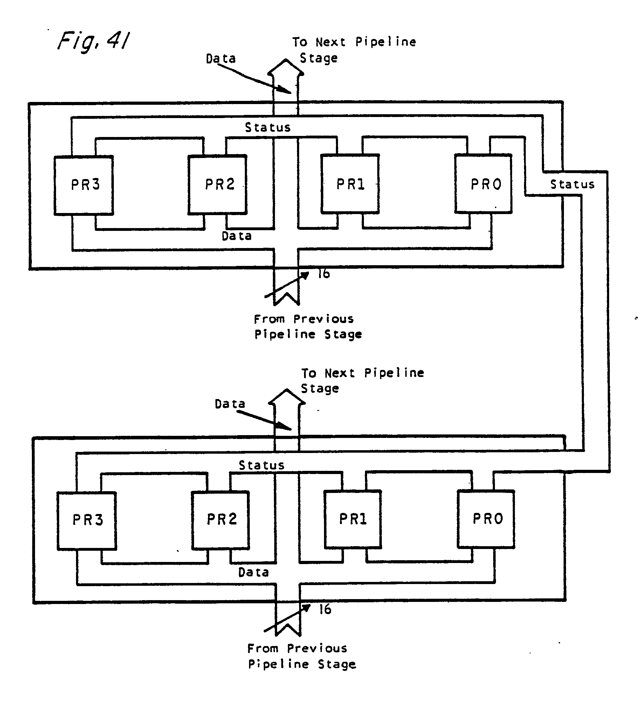

Figure 41 shows two RIC chips connected to form a 128-bit wide hybrid lockstep processing element. Internally, the four processors on each chip are lockstepped. Since only one status port on each chip is used to create the lockstep between the two chips shown, it is possible to build an analogous hybrid processing element of any multiple of 64 bits in width.

Further flexibility and/or complexity in multi-RIC configurations is attained by using a tree topology to implement an interrupt-driven communication network.

The following three kinds of interrupts are handled in a uniform integrated fashion: (1) intrachip interrupts: the source and destination processors of these interrupts reside on the same RIC, so that these interrupts originate and are handled entirely on one RIC chip (2). Interchip interrupts: a source processor and the destination processors of these interrupts reside on different chips. (3) I/O interrupts: these interrupts originate at I/O devices and are directed to processors residing on one or more RIC chips.

Intrachip interrupts are usually used for dynamic reconfiguration on a chip, e.g., to initiate the internal lockstep mode or the pipeline mode of operation. Internal interrupts can also be used to obtain service from another processor on the same RIC chip. Interchip interrupts play a crucial role in multichip configurations, and are used to initiate various multichip modes of operation, such as external or internal lockstep pipelines mode. Interchip interrupts are also used to implement interprocessor communication in a multiprocessor environment, when different processors are implemented on different chips. A common example would be a multichip configuration containing a central processor and an I/O processor, implemented on different chips. The central processor and the I/O processor communicate via interrupts. The I/O processor may share a common bus with the central processor, while transferring information between the central processor's memory and the I/O device.

Thus, any processor on a chip can receive interrupts from three possible kinds of sources: another processor on the same chip, some processor on a different chip, or and I/O device. The following integrated interrupt scheme handles these interrupts in a uniform fashion. In response to any interrupt the interrupt manager 12 of the destination processor prompts the corresponding scheduler 16 to schedule an appropriate process, depending on the priority interrupt and that of the currently running process.

As noted above, each RIC includes an external interrupt manager 76, which manages the reception, storage, and internal processor notification of interrupts received from external sources, and manages the sending of interrupts generated by internal processes to external destinations.

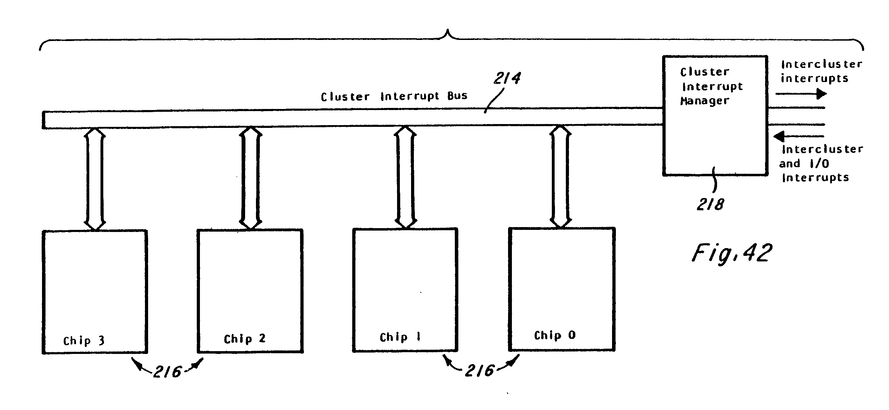

To generalize the internal interrupt management scheme discussed above to systems which may contain many RIC chips, we introduce the concept of a "cluster". A cluster is a set of (e.g.) four RIC chips, which can send interrupts to each other. Figure 42 provides an illustrative example of a cluster containing four chips. Thus, in a hierarchical organization of interrupts, a cluster is an entity that stands one level above a chip. In the present interrupt system, the role of chips within a cluster is analogous to the role of processors within a chip. We can now easily incorporate a bus to handle the interchip interrupts occurring within this cluster, i.e. the intracluster interrupts. Such a bus is called the "cluster interrupt bus" 214, and is shown in Figure 42. This bus also carries interrupts which are generated within the cluster but have destinations outside the cluster, i.e. the intercluster interrupts. Similarly, the bus is used to transfer I/O and intercluster interrupts which have arisen outside the cluster but are destined for some processor on one of the chips 216 within the cluster. To further implement this hierarchical view, a cluster interrupt manager 218 is provided, which serves the same role for a cluster as the external interrupt manager 76 does for an RIC chip. Thus, the external interrupt manager 76 of each chip 216 has to interface with the cluster interrupt bus 214 and with the cluster interrupt manager 218.

The first function of the cluster interrupt manager 218 is to serve as an interface to the cluster interrupt bus 214 and to the intercluster and I/O interrupts. Thus, the intercluster interrupts generated in a cluster are sent outside the cluster via the cluster interrupt bus 214 and the cluster interrupt manager 218. Similarly, intercluster and I/O interrupts generated outside a cluster, but destined for chips 216 residing in the cluster, are sent to the destination chips via the cluster interrupt manager 218 and the cluster interrupt bus 214. The cluster interrupt manager 218 and (e.g.) four chips 216 residing in the cluster share the cluster interrupt bus 214. The arbitration policy for the cluster interrupt bus 214 need not be a round-robin one. The RIC interrupt interface 76 allows for an externally controlled method of arbitration. Thus, a cluster which requires a different arbitration scheme implements the scheme in its respective cluster interrupt manager 218. The cluster interrupt manager 218 can implement arbitration methods such as priority, or on a position basis. In the priority-based arbitration policy all contenders for the cluster interrupt bus 214 (i.e., the chips 216 and the cluster interrupt manager 218) submit the priority of the interrupt (which they wish to send to other chips) to the bus arbitration logic present outside the chips. The arbitration logic then decides the contender with the highest priority and grants it control of the bus. In the position-based arbitration policy the position of the contender within a cluster decides who will gain control of the bus in case of a conflict. For example, in Figure 42, using the position-based policy we decide that if a conflict arises, the cluster interrupt manager 218 will always get the first priority, followed by chip 0, 1, 2, 3, respectively. The designer is free to choose more complex arbitration policies appropriate for the application at hand. However, simple policies such as round-robin or position-based can be implemented with very little logic external to a chip, while a more complex policy such as priority-based may require considerable logic external to a chip.

24

The second function of the cluster interrupt manager 218 is to serve as a buffer for intercluster interrupts going out of a cluster, as well as for intercluster and I/O interrupts coming into the cluster. This buffering facility serves essentially to isolate the interrupt traffic within and outside a cluster. The cluster interrupt manager 218 is designed to handle interrupt traffic on both sides of the interface simultaneously. Such a cluster manager could be implemented with an RIC, or with one or two processors within an RIC.

An obvious question at this point is how to manage a system with more than one cluster. These clusters send the intercluster interrupts via their cluster interrupt buses and cluster interrupt managers. Extending the hierarchical view further, we call a set of (e.g.) four clusters a "macrocluster". The clusters 220 within a macrocluster 222 share a "macrocluster interrupt bus" 224, which is connected to the "macrocluster interrupt manager" 226. The macrocluster interrupt bus 224 and the macrocluster interrupt manager 226 serve the same roles in a macrocluster 222 as do the cluster interrupt bus 214 and the cluster interrupt manager 218 in a cluster 220. We can extend this view further so that (e.g.) up to four macroclusters 222 form the next higher level entity, and so on. Finally, after an arbitrary number of levels, we reach the level of the system consisting of (e.g.) up to four subsystems 234, which share a bus to transfer interrupts. This bus is called the system interrupt bus 232.

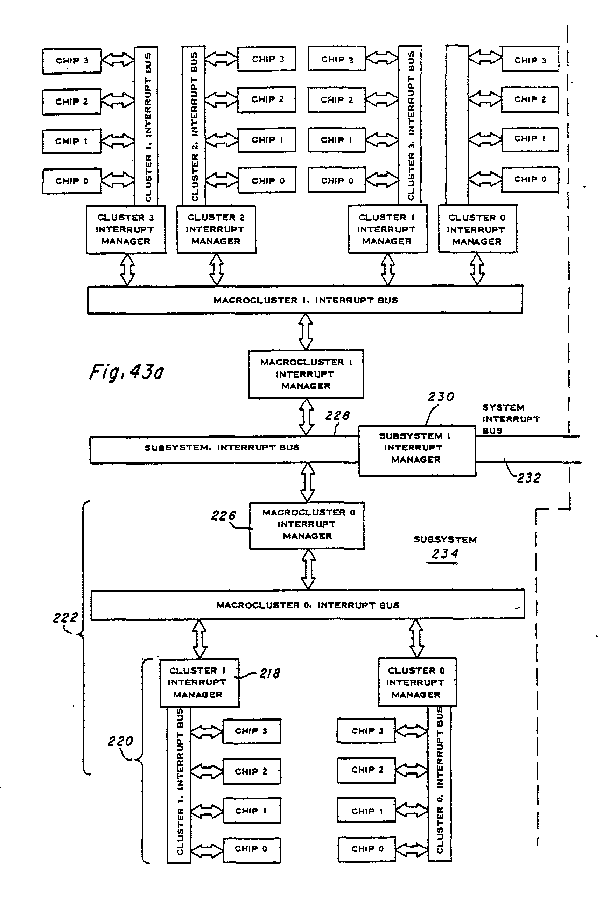

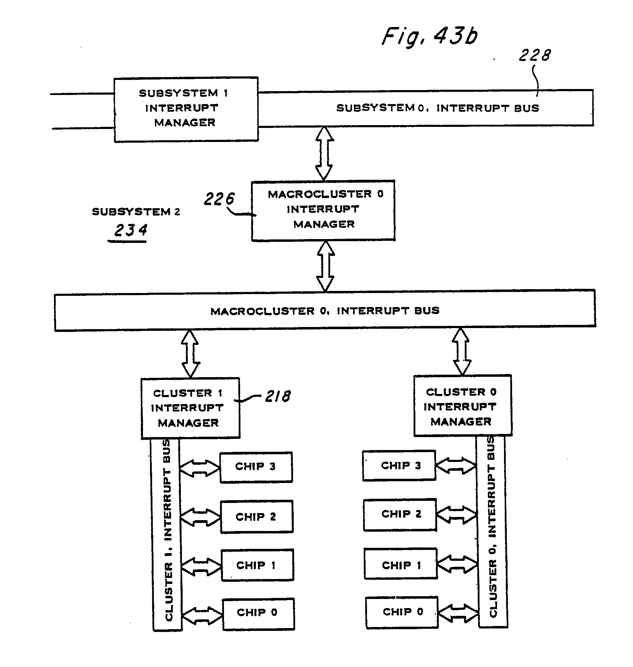

Figure 43 shows a system consisting of two subsystems (234), subsystems 0 and 1. Subsystem 1 contains macroclusters 0 and 1, and subsystem 0 contains only one macrocluster, i.e., macrocluster 0. Macrocluster 0 of subsystem 1 consists of four clusters, macrocluster 1 of subsystem 1 consists of two clusters, and the macrocluster of subsystem 0 consists of two clusters. Each cluster contains four chips. In this example, subsystem 1 contains only one macrocluster. Therefore, the functions of the interrupt manager of this macrocluster can be relegated to the interrupt manager of subsystem 0. This will allow us to do away with the macrocluster interrupt manager and the macrocluster interrupt bus in subsystem 0. They are shown here to illustrate the hierarchical view of interrupts.

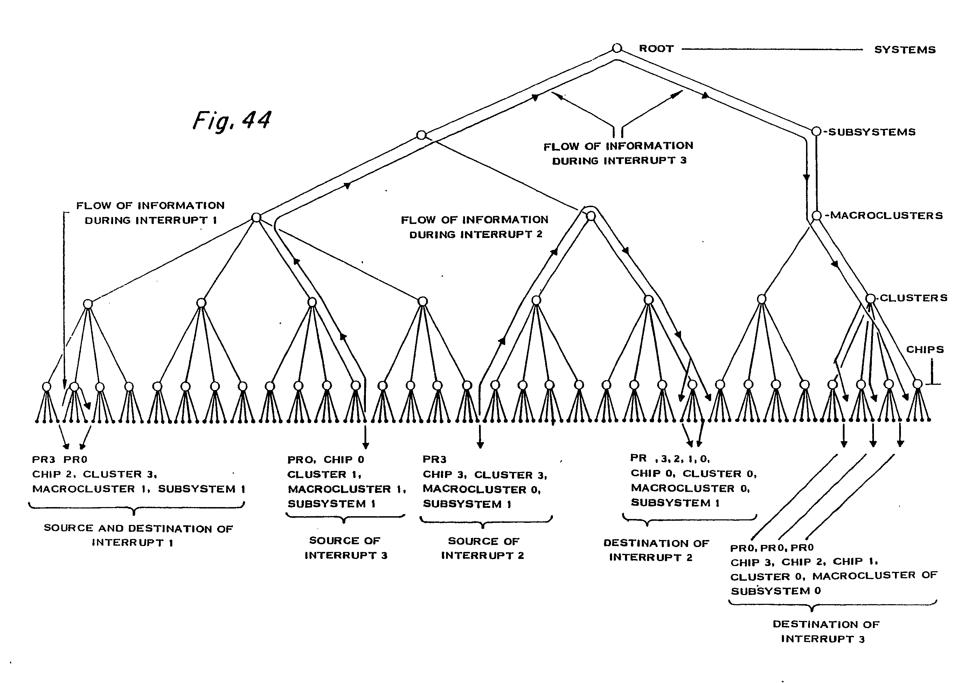

Figure 44 shows the system of Figure 43 using a tree representation, which is a natural representation for the hierarchical view of interrupts. Processors PR0—PR3 within the RIC chips 216 are at the lowest level of the tree, and are represented by the "leaves" of the tree. At the next higher level lie the nodes representing RIC chips 216. At the two next higher levels the nodes represent clusters 220 and macroclusters 222. Finally, the root of the tree represents a complete system.

We can assign numbers to the levels of the tree. Processors are assigned level 0. At successively higher levels lie chips 216, clusters 220, macroclusters 216, . . ., subsystems 234, designated as levels 1, 2, . . ., n, respectively. Similarly, we can assign numbers to the levels of interrupt hierarchy. In case of interrupt buses, the chip interrupt bus 88 lies at the lowest level, numbered level 0. At successively higher levels lie the cluster (214) macrocluster (224), . . ., subsystem (228), and system interrupt (232) buses. They are respectively numbered 1, 2, . . ., n. The interrupt manager 12 of a processor lies at the lowest level, i.e., level 0. At successively higher levels lie the chip (76), cluster (218), macrocluster (226), . . ., subsystem (230) interrupt managers. They are numbered 1, 2, . . ., n. A processor is completely identified by giving its complete "address", i.e., by identifying subsystem, . . ., macrocluster, cluster, chip, and processor. Thus, each address contains components that identify the subsystem, . . ., macrocluster, cluster, chip, and processor. We can similarly assign levels to this hierarchy of address components. The address component identifying the processor PR0—PR3 at the lowest level, i.e., level 0. At successively higher levels lie the address components identifying the chip, cluster, macrocluster, . . ., subsystem. They are assigned levels, 1, 2, . . ., n.

Interrupts among processors within a chip are expected to be the most frequently occurring interrupts, so that communication and processing of these interrupts must generally be completed as quickly as possible. As described above, the source, destination, priority, and related run-time information about such an interrupt are communicated in just one bus cycle, once the source processor gains control of the chip interrupt bus 88. Interchip interrupts within a cluster are expected to be the second most common interrupts. The present interrupt organization allows the communication of the identity of source chip 216 and processor PR0—PR3, destination chip(s) and processor(s), priority, and run-time information from the source processor to the cluster interrupt manager 218 in eight bus cycles using the cluster interrupt bus 214. Intercluster interrupts within a macrocluster are expected to be next most common interrupts. The present interrupt organization allows the communication of the identity of the source cluster, chip, and processor; destination cluster(s), chip(s), and processor(s); and priority and run-time information about the interrupt from the source processor to the macrocluster interrupt manager 226 in ten bus cycles using the macrocluster interrupt bus 224. The communication of similar information during interrupts at each subsequently higher level takes only two additional bus cycles for each higher level.

Figure 44 also shows the direction of the flow of information during three sample interrupts, 1, 2, and 3. This information identifies the source and destination of the interrupt, priority, and run-time information. We call this information "interrupt information". Interrupt 1 originates at PR 3 belonging to chip 2, cluster 3, macrocluster 1, subsystem 1, and is destined for PR 0 in the same chip. Interrupt 2 orginates at PR 3 belonging to chip 3, cluster 1, macrocluster 0, subsystem 1, and is destined for PR 0, PR 1, PR 2, and PR 3 in chip 0 and cluster 0 of the same macrocluster in which the source processor is located. Interrupt 3 originates at PR 0 in chips 1, 2, and 3 belonging to cluster 0 in the macrocluster of subsystem 10. The interrupt information starts at a leaf, travels up the tree as much as necesary, i.e., rises in level, and then travels down the tree to the leaves representing the destination processors. We distinguish two phases of an interrupt within the time when the interrupt information is travelling in the tree. These phases are called "rising" and "nonrising" phases. During the rising phase the interrupt information is strictly travelling up the tree, i.e., it is going from an interrupt manager at level i to another interrupt manager at level (i+1) via the interrupt bus at level i. During the nonrising phase, the interrupt information is either traveling at the same level in the tree, i.e., it is going from an interrupt manager at level i to another manager at level i via the interrupt bus at level i, or it is travelling down the tree, i.e., it is going from an interrupt manager at level i to another interrupt manager at level (i−1) via the interrupt bus at level (i−1). For example, in Figure 44 interrupt 3 is in its rising phase while the interrupt information is traveling in subsystem 1; its nonrising phase begins when the interrupt information travels from the subsystem 1 interrupt manager to subsystem 0 interrupt manager on the system interrupt bus, the nonrising phase continues while the information travels in subsystem 0 until it reaches the destination processors.

The interrupt information travels the maximum distance and takes maximum time if the source and destination processors reside in different subsystems, as in interrupt 3 above. On the other hand, the distance and time are minimum if the source and destination processors are located on the same chip, as in interrupt 1. Thus, the most frequently occurring interrupts are communicated and processed in the shortest time, while the least frequently occurring interrupts take maximum possible time for communication and processing. This desired benefit accrues directly from the hierarchical view of interrupts.

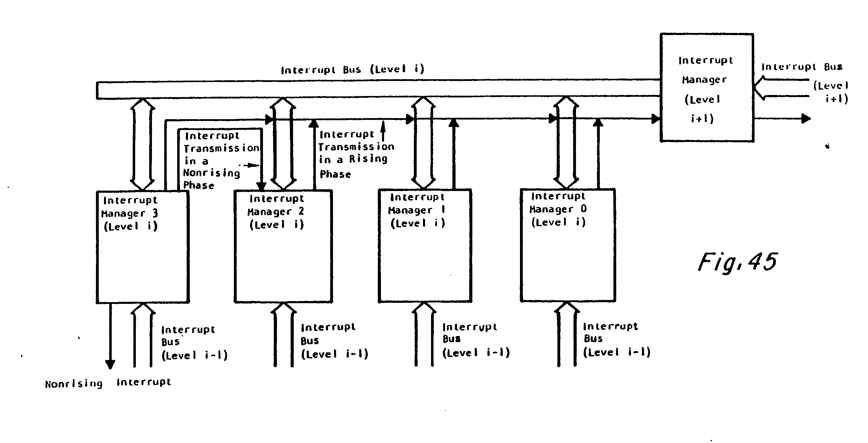

A general interrupt protocol is discussed here in terms of the interrupt bus and the interrupt manager at the ith level ($1 \leq i \leq n$; $i=0$ means a RIC external interrupt manager). As illustrated in Figure 45 an interrupt bus at level i can be shared by (e.g.) up to four interrupt managers at level i and one interrupt manager at level (i+1). On the other hand, an interrupt manager at level i interfaces with an interrupt bus at level (i−1), and the interrupt manager at level (i+1) interfaces with an interrupt bus at level (i+1). We will now review the definitions of the rising and nonrising phases of an interrupt in terms of an interrupt manager at level i.

During the rising phase of an interrupt, the interrupt is sent out by an interrupt manager at level i; it travels up the tree of interrupt hierarchy via the interrupt bus at level i, to the interrupt manager at level (i+1). An interrupt during the rising phase of transmission is illustrated in Figure 45.

. During the nonrising phase of an interrupt, the interrupt is sent out by an interrupt manager at level i, and the interrupt either remains at the same level, i.e., travels on the interrupt bus at level i and goes to another interrupt manager at level i, instead of going to the manager at level (i+1), or it travels down the tree of interrupt hierarchy via the interrupt bus at level (i−1), to interrupt manager at level (i−1). An interrupt during the nonrising phase of interrupt transmission also is illustrated in Figure 45.

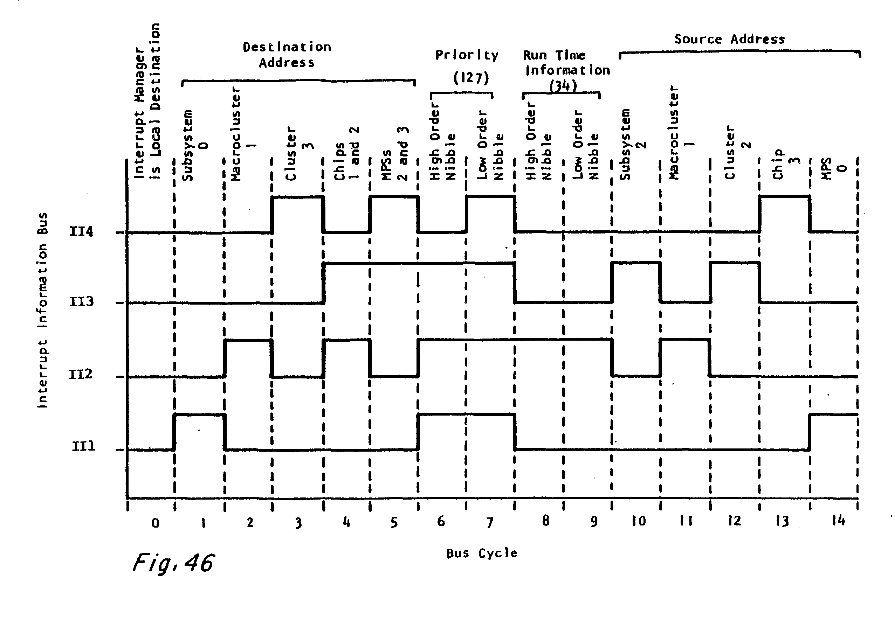

The protocol used during the rising phase of an interrupt is illustrated in Figure 46. In particular, the interrupt manager 2 at level i sends out an interrupt to the interrupt manager at level (i+1) via the interrupt bus at level i. The following activities take place during this interrupt. First, manager 2 at level i gains control of the interrupt bus at level i.

Bus cycle 0: The source interrupt manager at level i sends all zeroes on the interrupt information lines to designate the interrupt manager at level (i+1) as the destination of this interrupt. The interrupt manager at level (i+1) determines that it is the destination for this interrupt. The length of each interrupt will depend on the source and destination address lengths. If the interrupt manager at level (i+1) has enough buffer space to store a worst case length interrupt, the interrupt manager begins to accept and store the interrupt information. Otherwise, the interrupt manager does not signal that the first nibble of the interrupt information has been accepted. In Figure 46 the transfer synchronization signals indicate that the first nibble has been received, which implies that the interrupt manager has enough buffer space to store the interrupt information.

Bus cycles 1 through (2n+4): These cycles are used to transfer information identifying the interrupt's destination address, the interrupt's priority, and the interrupt's source address. The destination address is sent in the following order: subsystem, ..., macrocluster, cluster, chip and PR; i.e., starting with the topmost relevant address component and proceeding down the hierarchy in a decreasing order up to the PR identification. The letter n is the number of levels in the hierarchy. In Figure 46 subsystem 0, macrocluster 1, cluster 3, chips 1 and 2, processors PR 2 and PR 3 are specified as destinations. The priority of the interrupt is 127, and the run-time information is 34. The source address of the interrupt is subsystem 2, macrocluster 1, cluster 2, chip 3 PR 0. Here, we have assumed that the topmost relevant address is the subsystem address, and therefore 2n cycles are required to transfer information identifying the source and the destination in the worst case. Another four cycles are needed to send the interrupt's priority and other related information. For example, if the topmost relevant address is only a macrocluster address, then only the macrocluster, cluster, chip, and processor sequence need to be specified on bus cycles 1 through 5. Bus cycles 6 and 7 are used to transfer the priority of interrupt, and bus cycles 8 and 9 are used to transfer run-time information about the interrupt. The source address is sent on bus cycles 10 through 14.

There are two differences between the rising protocol and the nonrising protocol. One is that for the rising protocol, the interrupt is passed to the next higher level. For the nonrising protocol, an interrupt can be sent to the next lower level, or it can be sent to a destination at the same level. The other difference between the two protocols is the order in which the source and destination addresses are sent. For the rising protocol, the highest level of the address is sent first. For the nonrising protocol, the next level of the hierarchy to be addressed is sent first.

The following example illustrates these protocols more concretely. Consider a system with a hierarchy consisting of subsystems, macroclusters, chips, and processors PRs. An interrupt originated in one subsystem and destined to go to some other subsystem travels the hierarchy as indicated in Table 3. The table shows the interrupt traffic on an interrupt bus at each level (starting from level 1, since we are discussing the interrupt protocol outside a chip), indicating the sequence in which the information that identifies the source and the destination is transferred.

Table 3 illustrates the following points: the beginning of the nonrising phase of an interrupt signifies that the interrupt has reached the topmost level in the hierarchy to which it needs to climb. In the case illustrated by the table, it is the system level, i.e., level 5. During the nonrising phase of an interrupt, the level of the first address component matches that of the interrupt bus on which the information identifying the source and the destination is routed. For example, the subsystem interrupt bus is at level 3, and the address component identifying a macrocluster is also at level 3.

TABLE 3

Interrupt traffic external to a chip

| Interrupt bus in use | Sequence of information transfer identifying source and destination |
|---|---|
| | Rising phase: |
| Cluster bus | Subsystem, macrocluster, cluster, chip, processor |
| Macrocluster bus | Subsystem, macrocluster, cluster, chip, processor |
| Subsystem bus | Subsystem, macrocluster, cluster, chip, processor |
| System bus | Subsystem, macrocluster, cluster, chip, processor |
| | Nonrising phase: |
| Subsystem bus | Macrocluster, cluster, chip, PR, subsystem* |
| Macrocluster bus | Cluster, chip, PR, subsystem,* macrocluster* |
| Cluster bus | Chip, PR, subsystem,* macrocluster,* cluster* |

*This address component is unnecessary in identifying the destination of an interrupt and hence is not sent on the destination bus.

During the nonrising phsae of an interrupt transmission, the sequence of information identifying the destination can be easily derived by a simple "shift address component left" operation on the destination address. This fact will be exploited to construct a simple algorithm for interrupt managers to construct the sequence of information identifying the destination of interrupts passed on by them. Recall that when an interrupt manager gets control of the bus, it identifies the destination interrupt manager on the first cycle. As shown in Table 3, the destination manager can be easily identified by the first address component during the nonrising phase of an interrupt; during the rising phase of an interrupt, it is identified by all zeros on the destination bus.

The overall functions performed by interrupt managers are discussed below. We will present the discussion initially in terms of an interrupt manager at level i.

Recall that an interrupt manager at level i interfaces with the interrupt bus at level i on one hand, and the interrupt bus at level (i−1) on the other. These buses may be arbitrated according to different policies. Typical examples of these policies are by round-robin, by priority, by position, etc. The chip interrupt bus 88 is arbitrated according to a round-robin policy. Any interrupt manager must be able to cope with simultaneous handling of interrupts on both sides. A block diagram showing the interface between the interrupt manager and interrupt buses is shown in Figure 45.

Each interrupt manager maintains its own queue of interrupts waiting to be sent. For each interrupt the destination address priority, run-time information, the source address, and the phase (rising or nonrising) are maintained in the queue. During the rising phase of an interrupt, all the address components starting from the topmost relevant level must be stored for the source and destination identification. During the nonrising phase of an interrupt, only those destination address components below the level of the interrupt manager need to be maintained for the destination identification. For example, a cluster interrupt manager 218 need store only the chip and processor identification for a destination. The preferred interrupt manager maintains these queues as a priority-based discipline, although a first-in first-out queue is simpler to maintain. In the priority-based queue the interrupt lying in the front of the queue has the highest priority among all interrupts in that queue, independent of its arrival time in the queue.

The information status signals indicate when address information is being sent. As described above, the destination address is sent first, followed by the interrupt data and the source address of the interrupt. The interrupt manager counts the number of destination addresses received. On the basis of this number, and the knowledge of its own level in the interrupt hierarchy, the interrupt manager decides whether to send the information identifying the source/destination in the order in which it arrived (rising phase), or to perform a "Rotate address component left" (nonrising phase).

The hierarchical interrupt network has been described as an example of the application of the RIC's interrupt port capability. This interrupt port is fully general in the interrupt topology and the information protocol. The hierarchical interrupt network is only one class of network. Within this network there is variability with respect to the topology, which affects a RIC's external interrupt manager in two ways. One variation is that the length of addresses in the network varies as the number of levels varies. As the address length varies, the buffer space in the interrupt manager varies. The buffer space variation can be handled by design of the hardware of interrupt managers not contained in RICs. The buffer space variation is handled in the RIC by the programs that control a RIC's external interrupt manager 76. Another variation from topology is the set of valid addresses. This variation is also handled by programs used by a RIC's external interrupt manager or by hardware implementation in other interrupt managers.

The above discussion has been limited to an interrupt network containing only RICs. However, it applies equally well to network containing any I/O device such as channels, discs, printers, and communication network interfaces. The only requirement for its applicability is that each I/O device have an interface that is compatible with the RIC interrupt port.

**Claims**

1. A restructurable monolithic integrated circuit having a plurality of bus (14, 52, 56) connected processors (PR0, PR1, PR2, PR3) which are adapted to process data in response to control signals either independently or in lockstep, the circuit having interrupt facilities and external pins, characterized in that each of said processors has a buffering internal interrupt manager (Figure 2; 12) for receiving and transmitting interrupt signals containing self-describing type information for discriminating between addresses and data in different format and length, all internal interrupt managers are interconnected by means of the control bus (14), a buffering external interrupt manager (76) is coupled to some of the external pins and to said control bus for controlling the communication of said interrupt signals between different internal interrupt managers, a control store manager (38) arbitrates access of the external and internal interrupt managers to the control bus, and each microprocessor has an associated status bus multiplexer (48, 50) connected to the control bus so as to control the operation of the processors to perform independent operation or cooperation of the processors to perform lockstepped or pipelined operations.

2. A multi-processor system comprising a plurality of restructurable monolithic integrated circuits according to claim 1 with external interface controls (72—76) for each internal bus which serve for the interconnection with others of the circuits, the multi-processor system having a multi-level hierarchical interrupt structure in which several circuits are grouped into clusters, each of which is controlled by a buffering cluster interrupt manager (218).

3. A multi-processor system according to claim 2, characterized in that the clusters are grouped into macroclusters (Figure 43a), each of which is controlled by a buffering macrocluster interrupt manager.

4. A multi-processor system according to claim 3, characterized in that macroclusters are grouped into subsystems each having a subsystem interrupt manager.

**Patentansprüche**

1. Umstrukturierbare monolithische integrierte Schaltung mit mehreren, über Busleitungen (14, 52, 56) verbundenen Prozessoren (PR0, PR1, PR2, PR3), die Daten in Abhängigkeit von Steuersignalen entweder unabhängig voneinander oder im Verbund miteinander verarbeiten können, wobei die Schaltung Unterbrechungseinrichtungen und externe Anschlußstifte aufweist, dadurch gekennzeichnet, daß jeder der Prozessoren eine puffernde interne Unterbrechungsbehandlungseinheit (Figur 2; 12) zum Empfangen und Aussenden von Unterbrechungssignalen aufweist, die selbstdefinierende Informationen zum Unterscheiden zwischen Adressen und Daten in unterschiedlichen Formaten und Längen enthalten, wobei alle internen Unterbrechungsbehandlungseinheiten mit Hilfe der Steuerbusleitung (14) miteinander verbunden sind, daß an einige der externen Anschlußstifte und an die Steuerbusleitung eine puffernde externe Unterbrechungsbehandlungseinheit (76) angeschlossen ist, die die Übertragung der Unterbrechungssignale zwischen den verschiedenen internen Unterbrechungsbehandlungseinheiten steuert, daß eine Steuerspeicher-Behandlungseinheit (38) über den Zugang der externen und internen Unterbrechungsbehandlungseinheiten zu der Steuerbusleitung entscheidet und daß jedem Mikroprozessor ein Statusbus-Multiplexer (48, 50) zugeordnet ist, der an die Steuerbusleitung angeschlossen ist, so daß der Betrieb der Prozessoren so gesteuert wird, daß diese unabhängig voneinander oder in Zusammenwirkung zur Durchführung eines Verbundbetriebs oder eines Pipeline-Betriebs arbeiten.

2. Mehrprozessorsystem mit mehreren umstrukturierbaren monolithischen integrierten Schaltungen nach Anspruch 1 mit externen Schnittstellensteuereinheiten (72—76) für jede interne Busleitung, die dem Herstellen der Verbindung mit anderen Schaltungen dient, wobei das Mehrprozessorsystem eine hierarchische Unterbrechungsstruktur mit mehreren Ebenen aufweist, bei der mehrere Schaltungen zu Gruppen zusammengefaßt sind, von denen jede durch eine puffernde Gruppen-Unterbrechungsbehandlungseinheit (218) gesteuert wird.

3. Mehrprozessorsystem nach Anspruch 2, dadurch gekennzeichnet, daß Gruppen, in Großgruppen (Figur 43a) gruppiert sind, von denen jede durch eine puffernde großgruppen-Unterbrechungsbehandlungseinheit gesteuert wird.

4. Mehrprozessorsystem nach Anspruch 3, dadurch gekennzeichnet, daß die Großgruppen in Untersystemen gruppiert sind, die jeweils eine Untersystem-Unterbrechungsbehandlungseinheit enthalten.

**Revendications**

1. Circuit intégré monolithique restructurable, comportant plusieurs processeurs (PR0, PR1, PR2, PR3) connectés par des lignes omnibus (14, 52, 56) qui sont adaptés pour traiter des données en réponse à des signaux de commande, soit indépendamment, soit en phase bloquée; circuit ayant des possibilités d'interruption et des broches extérieures, caractérisé en ce que chacun desdits processeurs comporte un système de gestion d'interruption interne formant tampon (Fig. 2; 12) pour recevoir et émettre des signaux d'interruption qui contiennent des informations du type à auto-description pour la discrimination entre des adresses et des données de différents formats et longueurs, tous les systèmes de gestion d'interruption interne étant interconnectés par la ligne omnibus de commande (14), un système de gestion d'interruption externe à mise en tampon (76) étant couplé avec certaines des broches extérieures et ladite ligne omnibus de commande pour commander les communications desdits signaux d'interruption entre différents systèmes de gestion d'interruption interne, un système de gestion de mémoire de commande (38) arbitrant l'accès des systèmes de gestion d'interruptions externe et interne à la ligne omnibus de commande, et chaque microprocesseur ayant un multiplexeur de ligne omnibus d'état associé (48, 50) connecté à la ligne omnibus de commande de manière à commander le fonctionnement des processeurs afin d'effectuer des opérations indépendantes ou une coopération des processeurs pour effectuer des opérations en phase bloquée ou en pipeline.

2. Système à processeurs multiples comportant plusieurs circuits intégrés monolithiques restructurables selon la revendication 1, avec des commandes d'interface extérieure (72, 76) pour chaque ligne omnibus intérieure servant à l'interconnexion avec d'autres des circuits, le système à processeurs multiples ayant une structure d'interruption hierarchique à niveaux multiples dans laquelle plusieurs circuits sont groupés en des groupements dont chacun est commandé par un système de gestion d'interruption de groupement à mise en tampon (218).

3. Système à processeurs multiples selon la revendication 2, caractérisé en ce que les groupements sont groupés en des macro-groupements (Fig. 43a) dont chacun est commandé par un système de gestion d'interruption de macro-groupement à mise en tampon.

4. Système à macroprocesseurs multiples selon la revendication 3, caractérisé en ce que des macro-groupements sont groupés en des sous-systèmes ayant chacun un système de gestion d'interruption de sous-système.

Fig.1

CONTROL STORE MANAGER

76 — EXTERNAL INTERRUPT MANAGER

CONTROL BUS 14

PR3     PR2     PR1     PRØ

12 — INTERRUPT MANAGER
16 — SCHEDULER

DLA 22

REGISTERS ALU, DECODER

74 — EXTERNAL STATUS PORT

MEMORY INTERFACE

75 — EXTERNAL STATUS PORT

STATUS BUS

56 52

EXTERNAL DATA PORT

DATA BUS

EXTERNAL DATA PORT

72

RAM MEMORY — 66

73

0 071 727

## Fig.2

Fig. 3

DYNAMIC LOGIC ARRAY
WITH REGULAR PARTITIONING

*Fig. 4*

4

## Fig. 5

ADDRESS (14 LINES) — 84 — $A_0$ / $A_{14}$

DESTINATION (4 LINES) — 86 — $DN_0$ / $DN3$

DATA (40 LINES) — 82 — $D_0$ / $D_{39}$

DATA ROUTING (4 LINES) — 90 — $DR_0$ / $DR_3$

100 — ADDRESS READY — AR

DATA READY — DR

104 — INTERRUPT READY (DAISY CHAINED) — 98 — IR

BUS AVAILABLE (DAISY CHAINED) — BA

INTERRUPT BUS (4 LINES) — 88 — $I0$ / $I3$

## Fig. 6

CENTRAL CONTROLLER — 94

MODULE CONTROLLER — 96
MODULE CONTROLLER
MODULE CONTROLLER — 96
MODULE CONTROLLER

5

CONTROL STORE MEMORY MANAGER

CENTRAL
CONTROLLER , *94*

```
                  DESTINATION
          ┌──11   AND         ┌──14              ┌──15
  ┌──────────────┐ ADDRESS ┌──────────────┐  ┌──────────────┐
  │ CONTROL STORE│────────▶│ SELECT 1 OF 4│─▶│ SEND ADDRESS │
  │ MEMORY READ  │         │MEMORY MODULES│  │TO THE SELECTED│
  │              │         │FROM 2 MSBS OF│  │MEMORY MODULE │
  │              │         │   ADDRESS    │  │              │
  └──────────────┘         └──────────────┘  └──────────────┘
```

*Fig. 7*

```
                              ┌──11
                           ┌──────────────┐
                           │    QUEUE     │
                           │ DESTINATION  │
                           │ AND ADDRESS  │
                           └──────────────┘
                               16 │
                           ┌──────────────┐
                           │SELECT QUEUED │
                           │  ADDRESS FROM A│
                           │QUEUE (FIRST  │
                           │COME FIRST SERVE│
                           │   ORDER)     │
      CONTROLLER AT        └──────────────┘
      EACH MEMORY ┤         13 │
      MODULE              ┌──────────────┐
                           │ACCESS MEMORY │
                           └──────────────┘
                           12 │
                           ┌──────────────┐
                           │  SEND WORD   │
                           │ FETCHED FROM │
                           │  MEMORY TO   │
                           │ DESTINATION  │
                           └──────────────┘
                           14 │
                           ╭──────────────╮
                          (  WAIT TILL NEXT )
                          (  CONTROL STORE  )
                          (    ACCESS       )
                           ╰──────────────╯
```

```
                      BAO3
      ┌──────────────────────────────────────┐
      │      BA32          BA21        BA10   │
      │  ┌──────────┐  ┌──────────┐  ┌────────┤
  ┌───┴───┐  ┌──────┴┐  ┌──────┴┐  ┌──────┴┐
  │  PR3  │  │  PR2  │  │  PR1  │  │  PRφ  │
  │       │  │       │  │       │  │       │
  └───────┘  └───────┘  └───────┘  └───────┘
```

*Fig. 8*

CONTROL LINES

Fig. 9

P ~ 124    K ~ 126    R ~ 128

BUS A, 108
112

16    INPUT
LATCH A

16    INPUT
LATCH B

114
BUS B, 110

P
(PROPAGATE)
FUNCTIONAL
BLOCK

K
(KILL)
FUNCTIONAL
BLOCK

C
(CARRY
CHAIN)

R
(RESULT)
FUNCTIONAL
BLOCK

FLAG
GENERATION
LOGIC

OUTPUT
LATCH

116    118    120    122    134    136

CARRY ON, 132    CARRY IN, 130

STATUS MPXR    ~ 48

STATUS MPXR    ~ 50

0 071 727

Fig. 10

OUT = G(A,B)

$\overline{B}$

B

$\overline{I}$

.1

$G_{II}$    $G_{I}$    $G_{2}$    $G_{3}$

FUNCTIONAL BLOCK IN ALU

Fig. 11

$\phi_I$
PRECHARGE

CARRY—OUT

$\overline{K}$

$\overline{P}$

$\overline{P}$

P

$C_{in}$

$\overline{C_{in}}$

$\overline{P}$

CARRY—IN

8

Fig.12

## Fig. 13

INPUT LATCH

MSB

LSB

LEADING BIT FOR SHIFT LEFT
TRAILING BIT FOR SHIFT RIGHT

TRAILING BIT FOR SHIFT LEFT
LEADING BIT FOR SHIFT RIGHT

## Fig. 14

INPUT LATCH A

LOST

LOGIC 0

(A) SHIFT LEFT WITH THE TRAILING BIT FILLED WITH 0
AND THE LEADING BIT LOST (16 BIT OPERAND)

INPUT LATCH A

INPUT LATCH B

(B) ROTATE LEFT (32 BIT OPERAND)

INPUT LATCH A

LINK-IN

LINK-OUT

(C) SHIFT RIGHT WITH THE TRAILING BIT CONNECTED TO
THE LINK-IN, AND THE LEADING BIT CONNECTED TO
THE LINK-OUT (16 BIT OPERAND)

**Fig. 15**

BIT 0 | 0
0
1
0
BIT 3 | 1
1
1
0
1
1
1
1
BIT 11 | 0
0
1
1
BIT 15 | 0

INPUT
LATCH A
138

SERV
142

BIT 0 | 1
1
1
0
1
1
1
0
BIT 8 | 0
0
0
0
0
0
0
0
BIT 15 | 0

OUTPUT
LATCH
150

**Fig. 16**  DATA BUS

| | | |
|---|---|---|
| ADDRESS | 16 | 156 |
| DATA | 16 | 158 |
| ARBITRATION | | 160 |
| SOURCE | 4 | 162 |
| MODULE BUSY | 1 | 164 |
| SOURCE STATUS | 1 | 166 |
| DESTINATIONS | 10 | 168 |
| BCU MODE | 1 | 167 |
| BUS STATUS | 2 | 165 |

0 071 727

11

## Fig. 17

**DATA BUS PROTOCOL**

(WAIT FOR ARBITRATION TO GRANT SOURCE THE BUS)

```
SOURCE (PROCESSOR,
MEMORY MODULE, OR
DATA PORT) WAITS TO
GAT BUS ACCESS
```
→
```
WAIT OVER
(LINE 160 HIGH)
```
→
```
SOURCE
INDICATES
ITS 4 BIT
CODE ON
LINES 162
```
→

```
IF THE SOURCE IS
A MEMORY MODULE AND
HAS A   PENDING
MEMORY REQUEST
```
— NO →
```
THE MEMORY ACCESS
DESTINATION LINES 168
ARE RAISED TO
INDICATE 1 UP TO 10
DESTINATIONS.
```

YES

```
SOURCE LINES 162
INDICATE NEXT
PROCESSOR OR
MEMORY MODULE TO
BE SERVICED
```

```
IF THE DESTINATIONS
ARE ONE OR MORE MEMORY
MODULES THAT HAVE
PENDING MEMORY
REQUESTS
```

YES

```
RAISE LINE 166
INDICATING THAT
SOURCE LINES
DESIGNATE SOURCE
TO BE SERVICED
NEXT
```

```
PULL DOWN WIRE-
ANDED MEMORY
MODULE BUSY LINE 164
```

```
RELINQUISH
BUS AND LET
ARBITRATION
SELECT THE
NEXT SOURCE
(RAISE LINE 160)
```
←
```
SEND ADDRESS AND/OR
DATA ON ADDRESS
AND DATA BUSES
156 AND 158
```

Fig. 18

| BUS A | | 108 | 108 | 108 | 108 | |
|---|---|---|---|---|---|---|
| _170_ LEFT PORT | _174_ LITERAL REGISTER | STACK _32_ REGISTER FILE (16 REGISTERS OF 16 BITS WIDTH | _30_ BARREL SHIFTER | _28_ ALU | FLAG & SHIFT REGISTER SETS _44 & 46_ | _172_ RIGHT PORT |
| BUS B | | 110 | 110 | 110 | 110 | |

Fig.19  RESTRUCTURABLE IC RAM SYSTEM

| PR3 | PR2 | PR1 | PR0 |
|-----|-----|-----|-----|

| MEMORY MAPPER 34 OF PR3 | MEMORY MAPPER 34 OF PR2 | MEMORY MAPPER 34 OF PR1 | MEMORY MAPPER 34 OF PR0 |
|-----|-----|-----|-----|

TO EXTERNAL PORT 72

| BCU 58 | BCU 58 | BCU 58 | BCU 58 |

DATA                    BUS 56

TO EXTERNAL PORT 73

| MSU 68 | MSU 68 | MSU 68 | MSU 68 |

| RAM MEMORY MODULE 60 | RAM MEMORY MODULE 60 | RAM MEMORY MODULE 60 | RAM MEMORY MODULE 60 |

0 071 727

14

*Fig. 20*

TO/FROM
MEMORY MAPPER, *34*
*184*

*182*

BIDIRECTIONAL
SWITCH

\*

PASSES

DATA/
BUS

DATA/
BUS

*56*

*180*

*56*

*178*

\*\*

BIDIRECTIONAL
SWITCH

*184*

*Fig. 21*

BIDIRECTIONAL
SWITCH

BLOCKS

DATA/
BUS

DATA/
BUS

*16*

*16*

BLOCKS

BIDIRECTIONAL
SWITCH

BUS CONTROL
UNIT (BCU)

# 0 071 727

*Fig. 22*

NON LOCAL SOURCE
MEMORY REQUEST

BUS
ACTIVE

DETERMINE
IF ACCESS IS
FOR THIS MSU

IS FOR
THIS
MSU

NO

WAIT

LOCAL PR
MEMORY
REQUEST

LOCAL
MSU
BUSY

NO

YES

ARE
MEMORY
REQUESTS
PENDING

NO

YES

YES

WAIT

SEND
REQUESTING
PR A BUSY
SIGNAL

QUEUE
REQUESTING
PR'S TAG
(FIRST COME
FIRST SERVE
ORDER

PERFORM
MEMORY
ACCESS

MEMORY
READ

YES

WAIT FOR
BUS

SEND SIGNAL TO
PR WHOSE
MEMORY REQUEST
WILL BE
SERVICED NEXT,
IF ANY

SEND WORD
TO
DESTINATIONS

NO

WAIT IS NOT
FINISHED

WAIT TILL
THE PR WHOSE
MEMORY RE-
QUEST IS TO
BE SERVICED
NEXT

YES

MORE
MEMORY
REQUESTS

NO

WAIT

16

**0 071 727**

PR3                                    PR6

CARRY STATUS *190* ─────────────     ─────────────

CARRY IN/OUT *191* ─────────────     ─────────────

OVERFLOW *192* ─────────────     ─────────────

NEGATIVE *194* ─────────────     ─────────────

ZERO *196* ─────────────     ─────────────

PR SYNCH *198* ─────────────     ─────────────

SHIFT/ROT *199* ─────────────     ─────────────

*Fig. 23*     INDEPENDENT MODE INTERCONNECTION

PR3                                    PR2

CARRY STATUS *190* ─────────────     ─────────────

CARRY IN/OUT *191* ─────────────     ─────────────

OVERFLOW *192* ─────────────     ─────────────

NEGATIVE *194* ─────────────     ─────────────

ZERO *196* ─────────────     ─────────────

PR SYNCH *198* ───────────────────────────────────

SHIFT/ROT *199* ─────────────     ─────────────

*Fig. 24*     PIPELINE MODE INTERCONNECTION

PR3                                    PR2

CARRY STATUS *190* ───────────────────────────────

CARRY IN/OUT *191* ───────────────────────────────

OVERFLOW *192* ───────────────────────────────

NEGATIVE *194* ───────────────────────────────

ZERO *196* ───────────────────────────────

PR SYNCH *198* ───────────────────────────────

SHIFT/ROT *199* ───────────────────────────────

*Fig. 25*     LOCKSTEP MODE INTERCONNECTION

17

Fig. 26

INDEPENDENT MODE

*Fig.27*

INTERNAL LOCKSTEP MODE

CONTROL STORE  ～38

COMMON INSTRUCTION STREAM TO ALL PR'S

CONTROL BUS ～14

| CARRY CHAIN | CARRY CHAIN | CARRY CHAIN |

PR3  PR2  PRI  PRO

SHIFT+ ROTATE LINKAGE  SHIFT+ ROTATE LINKAGE  SHIFT+ ROTATE LINKAGE

RIC CHIP

0 071 727

PIPELINE MODE                                Fig.28

# 0 071 727

Fig. 29

Fig.30

P(INT) = PRIORITY OF THE INTERRUPT
P(NEXT) = PRIORITY NEXT GREATEST PRIORITY PROCESS
P(CURR) = PRIORITY OF CURRENTLY EXECUTING PROCESS

NEXT — REGISTER CONTAINING PRIORITY OF NEXT SCHEDULED PROCESS
CURRENT — REGISTER CONTAINING PRIORITY OF CURRENTLY EXECUTING PROCESS
TEMP — TEMPORARY REGISTER

| TYPE FIELD 4 BITS | POSITION FIELD (BIT MAP OF PRS IN THE INTERRUPT PROCESS) 4 BITS | PM BIT (1 IF PRIORITY MASK IS VALID ) | PRIORITY MASK FIELD (CONTAINS PRIORITY OF PROCESS WHEN EXECUTING) 8 BITS | NT BIT (1 IF NEXT PRIORITY FIELD IS VALID ) | NEXT PRIORITY LEVEL FIELD (CONTAINS HIGHEST PRIORITY LEVEL FOR THIS PROCESS) 8 BITS | CONTROL STORE ADDRESS FIELD (POINTS TO THE FIRST MICRO-INSTRUCTION OF THIS PROCESS) 14 BITS |
|---|---|---|---|---|---|---|

TYPE 0000  SINGLE SLICE PROCESS
TYPE 0001  LOCKSTEP PROCESS
TYPE 0010  PIPELINE PROCESS
OTHER TYPES UNSPECIFIED

*Fig. 31*

| CS | BU | • | • | • | • | PRIORITY |
|---|---|---|---|---|---|---|
| 13 | 12 | 11 | 10 | 9 | 8 7 | 0 |

CS 1 → FULL CONTEXT SWITCH
   0 → PARTIAL CONTEXT SWITCH

BU 1 → BUFFER INTERRUPT IF NOT IMMEDIATELY PROCESSED
   0 → DO NOT BUFFER INTERRUPT

• UNDEFINED

*Fig. 32*

Fig. 33

BUS
AVAILABLE
SIGNAL

ADDRESS
BUS

CARRIES PRIORITY
OF INTERRUPT
AND INTERRUPT
DESCRIPTION DATA

CARRIES ADDRESS
OF NEXT FETCHED
MICROINSTRUCTION

INTERRUPT
BUS I1

P RI WILL START
INTERRUPT AFTER
DOING A CONTEXT
SWITCH

INTERRUPT
BUS I3

PRI IS THE SOURCE
OF THE INTERRUPT

PRI IS READY
TO RECEIVE
INTERRUPTS

DESTINATION
BUS DRI
(TO PRI)

PRI RECEIVES THE
INTERRUPT

INTERRUPT
AVAILABLE

N          N+1          N+2          N+X

0 071 727

Fig. 34

Fig. 35

0 071 727

| EXTERNAL INTERRUPT MANAGER | |
|---|---|
| PRIORITY | MESSAGE LENGTH |

GAIN ACCESS OVER INTERRUPT PORT

SEND MESSAGE BLOCK

| RECEIVING INTERRUPT MANAGER | |
|---|---|
| PRIORITY | STATUS |

*Fig. 36*

Fig. 37

Fig. 38

Fig. 39

Fig. 40

*Fig. 41*

To Next Pipeline
Stage

Data

Status

PR3    PR2    PR1    PRO    Status

Data

16

From Previous
Pipeline Stage

To Next Pipeline
Stage

Data

Status

PR3    PR2    PR1    PRO

Data

16

From Previous
Pipeline Stage

Fig. 42

*Fig. 43a*

Fig. 43b

*Fig. 44*

ROOT ——————————————————————— SYSTEMS

FLOW OF INFORMATION
DURING INTERRUPT 3

○-SUBSYSTEMS

FLOW OF INFORMATION
DURING INTERRUPT 1

FLOW OF INFORMATION
DURING INTERRUPT 2

○-MACROCLUSTERS

○-CLUSTERS

CHIPS

PR3 PR0
CHIP 2, CLUSTER 3,
MACROCLUSTER 1, SUBSYSTEM 1

PR0, CHIP 0
CLUSTER 1,
MACROCLUSTER 1,
SUBSYSTEM 1

PR3
CHIP 3, CLUSTER 3,
MACROCLUSTER 0,
SUBSYSTEM 1

PR ,3,2,1,0,
CHIP 0, CLUSTER 0,
MACROCLUSTER 0,
SUBSYSTEM 1

SOURCE AND DESTINATION OF
INTERRUPT 1

SOURCE OF
INTERRUPT 3

SOURCE OF
INTERRUPT 2

DESTINATION OF
INTERRUPT 2

PR0, PR0, PR0
CHIP 3, CHIP 2, CHIP 1,
CLUSTER 0, MACROCLUSTER OF
SUBSYSTEM 0

DESTINATION OF
INTERRUPT 3

0 071 727

34

Fig. 45

Fig. 46

Fig. 47

12-BIT DATA PATH

CONTROL PATH